# EUROPEAN PATENT SPECIFICATION

(11) **EP 4 098 007 B1**
(45) Date of publication and mention of the grant of the patent: **24.05.2023**
(21) Application number: 20829046.0
(22) Date of filing: 18.12.2020
(51) Int. Cl.: H04W 12/04, H04W 36/00, H04W 76/50

(54) **ROBUST EMERGENCY FALLBACK FROM 5G**
ROBUSTES NOTFALL-FALLBACK AUS 5G
REPLI D'URGENCE ROBUSTE À PARTIR DE 5G

(30) Priority: 31.01.2020 US 202062968364 P
(43) Date of publication of application: 07.12.2022
(73) Proprietor: TELEFONAKTIEBOLAGET LM ERICSSON (PUBL), 164 83 Stockholm (SE)
(72) Inventor: SHI, Nianshan, 176 74 JÄRFÄLLA (SE); NAKARMI, Prajwol Kumar, 191 42 SOLLENTUNA (SE); MELIN, Lena, 185 39 VAXHOLM (SE)
(74) Representative: Ericsson
(86) International application number: PCT/SE2020/051242
(87) International publication number: WO 2021/154135

(56) References cited:
- ERICSSON: "Update to Emergency Services Fallback", 3GPP DRAFT; S2-2001336, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG2, no. Incheon, KR; 20200113 - 20200117 16 January 2020 (2020-01-16), XP051844082, Retrieved from the Internet: URL:https://ftp.3gpp.org/tsg_sa/WG2_Arch/T SGS2_136AH_Incheon/Docs/S2-2001336.zip S2-2001336_23502CR_emergency_Fallback_sess ions_orange.docx [retrieved on 2020-01-16]
- "3 Generation Partnership Project; Technical Specification Group Services and System Aspects; Security architecture and procedures for 5G system (Release 16)", 3GPP STANDARD; TECHNICAL SPECIFICATION; 3GPP TS 33.501, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. V16.1.0 31 December 2019 (2019-12-31), pages 1-202, XP051841018, Retrieved from the Internet: URL:ftp://ftp.3gpp.org/Specs/archive/33_se ries/33.501/33501-g10.zip 33501-g10.doc [retrieved on 2019-12-31]

## Description

### Technical Field

The present disclosure relates to emergency fallback, for example from 5^{th} Generation (5G) networks.

### Background

Generally, all terms used herein are to be interpreted according to their ordinary meaning in the relevant technical field, unless a different meaning is clearly given and/or is implied from the context in which it is used. All references to a/an/the element, apparatus, component, means, step, etc. are to be interpreted openly as referring to at least one instance of the element, apparatus, component, means, step, etc., unless explicitly stated otherwise. The steps of any methods disclosed herein do not have to be performed in the exact order disclosed, unless a step is explicitly described as following or preceding another step and/or where it is implicit that a step must follow or precede another step. Any feature of any of the embodiments disclosed herein may be applied to any other embodiment, wherever appropriate. Likewise, any advantage of any of the embodiments may apply to any other embodiments, and vice versa. Other objectives, features and advantages of the enclosed embodiments will be apparent from the following description.

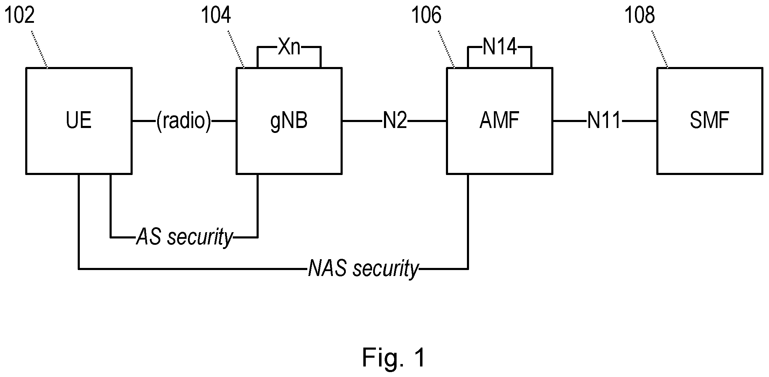

5G Network - The 3GPP standard TS 23.501 describes the 5G network architecture. A simplified version of a 5G network is shown in Fig. 1.

The User Equipment (UE) 102 is a mobile device used by the user to wirelessly access the network. The radio access network function 104 or base station called gNB (Next Generation Node B that supports new radio, NR) is responsible for providing wireless radio communication to the UE 102 and connecting the UE 102 to the core network 106, 108. A core network function called the Access and Mobility Management Function (AMF) 106 is responsible for handling the mobility of the UE 102, among other responsibilities. Another core network function called the Session Management Function (SMF) 108 is responsible for handling the session and traffic steering of the UE 102, among other responsibilities.

The UE 102 interacts with the gNB 104 over-the-air using a radio interface. The gNB 104 in turn interacts with the AMF 106 using the interface called N2. The interface between the AMF 106 and the SMF 108 is called N11. The gNBs 104 interact with each other using the Xn interface. Similarly, the AMFs 106 interact with each other using the N14 interface.

Fig. 1 does not show that the base station in a 5G radio access network (RAN) could also be an ng-eNB (which supports E-UTRA). The gNB and ng-eNB are together called NG-RAN in 5G architecture. The N2 interface is also known as the NG interface.

AS (access stratum) re-keying - The logical aspects between the UE 102 and the AMF 106 are referred to as non-access stratum (NAS) and the logical aspects between the UE 102 and the gNB 104 are referred to as access stratum (AS). Correspondingly, the security of communication (in the control plane and user plane, if applicable) are referred to as NAS security and AS security, respectively. When a state of security is established between the UE 102 and the AMF 106, both of them store the relevant security data, e.g. a NAS security key, a security key identifier, security capabilities, various counters, etc. Such a state of security between the UE 102 and the AMF 106 including the security data is referred to as a NAS security context. Similarly, the AS security context refers to the state of security including security data between the UE 102 and the gNB 104. The AS security context is derived from the NAS security context.

Over time, the UE 102 and the AMF 106 may change the shared NAS security context, e.g. as a result of running an authentication procedure. However, since the AMF 106 and the gNB 104 are different network functions, the change in the NAS security context is not automatically known to the gNB 104, meaning that the security of the AS traffic between the UE 102 and the gNB 104 is based on the AS security context derived from the old NAS security context. Consequently, whenever the NAS security context has changed, there is a need to synchronize it with the AS security context (i.e. to make a corresponding change to the AS security context.

This synchronization is referred to as AS re-keying. The AS re-keying is done either via an explicit UE Context Modification procedure (for example see Clause 6.9.2.2 of 3GPP TS 33.501 v16.1.0 that defines key derivations for context modification procedure) or as a part of handover procedures (see Clause 6.9.2.3 of 3GPP TS 33.501 v16.1.0 that defines key derivations during handover).

UE Context Modification procedure - The UE Context Modification procedure belongs to the N2 interface and is specified in 3GPP TS 38.413 v16.0.0. It should be noted that 3GPP TS 38.413 uses the term "NG" instead of the "N2" and correspondingly, the protocol stack is referred as Next Generation Application Protocol (NGAP). The procedure is initiated by the AMF, in general to modify the established UE context. The modification could be related to security or other types of parameters (e.g. radio parameters). Therefore, including security data is optional in this message. The message sent by the AMF is called the UE Context Modification Request message. When the modification is related to security (i.e. to perform AS re-keying), the message, among other data, includes the new security key and the UE security capabilities. It is specified that the NG-RAN node stores the received Security Key and takes it into use (if the security is activated).

Emergency service fallback - Voice service in mobile networks has strict regulatory requirements to allow emergency calls (accessibility, location positioning, traceability, etc.). A subscriber UE connected to a 5G SA system needs the system to support emergency calls, or alternative ways to handle emergency service/calls in the case that only NR does not support Emergency Services or the 5G Core (5GC) does not support Emergency Services. For example:
- Instructions on the 5GC support for emergency mechanisms are sent to the UE during registration, giving instructions for the UE to enter idle mode and perform cell reselection to find e.g. Long Term Evolution (LTE) carriers when attempting to perform the emergency call.
- The UE first accesses the NR system and then, when the UE is in connected mode the 5GC orders the 5G RAN, by sending an 'Emergency Fallback indicator', to handover or redirect the UE to the Evolved Packet Core (EPC). Mobility to Evolved Universal Terrestrial Radio Access (E-UTRA) takes place from connected mode in NR. The handover or redirection may also be to E-UTRA connected to 5GC.

The document "Update to Emergency Services Fallback", ERICSSON, vol. SA WG2, no. Incheon, KR; 20200113 - 20200117, 16 January 2020 (2020-01-16), XP051844082, discloses the procedure for emergency services fallback.

### Summary

There currently exist certain challenge(s). When the UE is in connected mode, the NGAP Initial Context Setup Procedure is performed and AS security is already activated.

As the AMF determines that a UE's attempt to perform an emergency fallback needs to be moved to E-UTRA network (EUTRAN), the AMF will then include information element (IE) Emergency Fallback Indicator in a NGAP UE CONTEXT MODIFICATION REQUEST message.

The NG-RAN node has mainly the options below:
1) release-with-redirect to EUTRAN; and
2) handover to EUTRAN

The EUTRAN can be connected to the EPC, or to the 5GC.

In 1) the NG-RAN will release the UE and also include some selected EUTRA carrier for the UE to search on for a suitable cell. If the UE finds a suitable cell that uses that carrier, the UE connects to that cell and performs the emergency call AS security needs to be activated for sending radio resource control (RRC) Release with redirection information.

In 2) the NG-RAN node will perform Handover to the EUTRAN. UE security also needs to be activated to perform the Inter-system Inter-RAT handover to EUTRA.

The gNB (AS) keys are cryptographically separated from the 5GC (NAS) keys. Separate AS and NAS level Security Mode Command (SMC) procedures are used. Security is more prioritized than ever. Security keys need to be fresh and re-keying procedures on-the-fly can be initiated in the 5G system.

It is a challenge where the UE requests the network for emergency service fallback while the network is preparing to perform AS re-keying with the UE. This is allowed by the current 3GPP specification in the same UE context modification procedure. However, performing re-keying in parallel with moving the UE to EUTRA will delay the emergency call, and also add an additional risk for call drop.

Certain aspects of the present disclosure and their embodiments may provide solutions to these or other challenges. The solutions in this disclosure provide for the robust handling of Emergency Fallback in 5G, when there is AS rekeying at the same time. Some solutions at the 5GC are to disallow the combination of the two information elements to be used, so as to prevent AS rekeying happening when the Emergency Fallback is requested. That is, some solutions at the 5GC disallow or prevent the two information elements being used at the same time. Some solutions at the NG-RAN side enable the RAN, upon the reception of a request to do an AS rekeying and Emergency Fallback, to only perform the Emergency Fallback. Solutions for 5GC nodes and NG-RAN nodes can be deployed independently or in combination. Also, some solutions relate to the UE operation. In short, the solutions can provide that the Emergency Fallback function is handled with robustness and/or high efficiency.

There are, proposed herein, various embodiments which address one or more of the issues disclosed herein.

The present invention is defined by the subject matter of the independent claims. Preferred embodiments are defined by the dependent claims.

Certain embodiments or aspects may provide one or more of the following technical advantage(s). In particular, certain embodiments provide that the emergency fallback is handled without further latency. Certain embodiments provide that the air interface is saved from unnecessary AS key update procedures. Certain embodiments provide that radio resources are conserved by avoiding intra-cell handover that does not add a significant security benefit. Certain embodiments offer resilience against poorly implemented or poorly configured core network functions (e.g. an AMF) that asks the radio network function (e.g. NG-RAN) to perform both AS re-keying and emergency fallback.

### Brief Description of the Drawings

Some of the embodiments contemplated herein will now be described more fully with reference to the accompanying drawings, in which:
Fig. 1 is a simplified block diagram of a 5G network;
Fig. 2 is a signalling diagram illustrating an AMF-based robust emergency fallback solution according to various embodiments;
Fig. 3 is a signalling diagram illustrating an NG RAN-based robust emergency fallback solution according to various embodiments;
Fig. 4 is a wireless network in accordance with some embodiments;
Fig. 5 is a user equipment in accordance with some embodiments;
Fig. 6 is a virtualisation environment in accordance with some embodiments;
Fig. 7 is a flow chart illustrating a method of operating a network node or wireless device according to various embodiments;
Fig. 8 is a virtualization apparatus in accordance with some embodiments;
Fig. 9 is a flow chart illustrating a method of operating a core network node according to various embodiments;
Fig. 10 is a flow chart illustrating an alternative method of operating a core network node according to various embodiments;
Fig. 11 is a flow chart illustrating a method of operating a radio access network node according to various embodiments;
Fig. 12 is a flow chart illustrating an alternative method of operating a radio access network node according to various embodiments;
Fig. 13 is a flow chart illustrating a method of operating a wireless device according to various embodiments;
Fig. 14 is a signalling diagram illustrating a successful UE context modification; and
Fig. 15 is a signalling diagram illustrating a UE context modification failure.

### Detailed Description

Some of the embodiments contemplated herein will now be described more fully with reference to the accompanying drawings. Other embodiments, however, are contained within the scope of the subject matter disclosed herein, the disclosed subject matter should not be construed as limited to only the embodiments set forth herein; rather, these embodiments are provided by way of example to convey the scope of the subject matter to those skilled in the art. Additional information may also be found in the document provided in the Appendix.

As discussed above, it a challenge when the UE requires emergency service fallback while the network was preparing to perform AS re-keying with the UE. In various embodiments, the emergency service fallback is Emergency Service Fallback as defined in 3GPP TS 23.501, section 5.16.4 v16.1.0, and/or 3GPP TS 23.502, section 4.14.3 v16.2.0. In the following, various solutions in different nodes are provided to solve this problem.

As used herein, a NAS security context can comprise any one or more of a NAS security key, a NAS security algorithm, a NAS uplink count, a NAS downlink count, security capabilities, and a key set identifier. Also as used herein, an AS security context can comprise any one or more of an AS security key, an AS security algorithm, an AS uplink count, an AS downlink count, security capabilities, a key chain counter, a user plane, and a security policy.

### AMF behavior and Solution

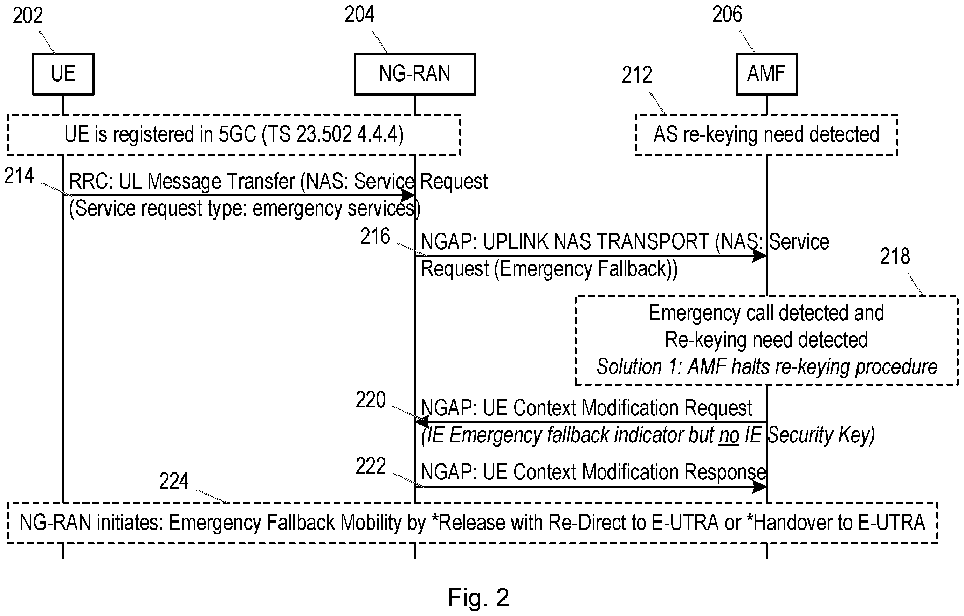

The signalling diagram in Fig. 2 illustrates an AMF-based robust emergency fallback solution according to various embodiments. That is, the AMF takes the action(s) required to handle emergency service fallback while the network was preparing to perform AS re-keying with the UE. Fig. 2 shows signalling between a UE 202, an NG-RAN 204 and an AMF 206.
1. The AMF 206 obtains information that the AS re-keying involving the NG-RAN 204 and the UE 202 is pending (step 212) and an emergency session is being requested by the UE 202. The emergency session request may be a request for an Emergency Service, or a request for Emergency Service Fallback. The type of emergency session requested can depend on information the UE 202 obtained on registration with the NG-RAN 204, information the UE 202 obtained from a network broadcast, or on the capabilities of the UE 202.
   a. The AMF 206 could obtain information about the pending AS re-keying (step 212) by determining that the AMF 206 has yet to perform a UE Context Modification procedure. That is, the AMF 206 can determine that an AS re-keying is pending or required if the AMF 206 has activated a new 5G NAS security context with a new key, K_{AMF}, that is different from the 5G NAS security context on which the currently active 5G AS security context is based, but the AMF 206 has not yet performed a NGAP UE Context Modification procedure.
   b. The AMF 206 could obtain information about the emergency fallback request by determining that the Service Request NAS message received from the UE 202 had a Service type value indicating emergency service fallback. Signal 214 shows the Service Request NAS message sent by the UE 202 to the NG-RAN 204 that has a Service type value indicating emergency service fallback. Signal 216 shows the corresponding Service Request NAS message sent by the NG-RAN 204 to the AMF 206. Signal 214 can be a RRC message. Signal 216 can be an NGAP message.
   c. The AMF 206 could obtain information about the emergency fallback request by determining that the Service Request NAS message received from the UE 202 had a Service type value indicating emergency service, and determining that the 5GC and/or the NG-RAN 204 does not support, or does not fully support, the emergency service. In that case the AMF 206 can determine that an emergency service fallback is required.
   Regardless of the approach used, at step 218 the AMF 206 has detected a need for an emergency call, and a need for re-keying.
2. Further, the AMF 206 can obtain information of what action to take in this scenario.
   a. This information about the action could be defined as a standardized behavior in one or more 3GPP technical specifications like 3GPP TS 33.501, 3GPP TS 38.413, 3GPP TS 23.501, 3GPP TS 23.502.
   b. The AMF 206 could obtain the information about the action from a local policy, e.g. a policy stored at or by the AMF 206.
   c. The AMF 206 could obtain the information about the action from a central storage or central database.
   d. The AMF 206 could obtain the information about the action from another 3GPP network function or network node like an SMF, a Policy Control Function (PCF), a Unified Data Management (UDM) function, a Network Exposure Function (NEF), a UE, or another AMF.
   e. The AMF 206 could obtain the information about the action from a non-3GPP network function or network node like an Application Function (AF).
3. Solution at the AMF 206 side: The AMF 206 performs the action.
   a. According to the invention, as shown in Fig. 2, the AMF 206 takes into account only the emergency fallback and ignores the pending AS re-keying (step 218). Thus the AMF 206 can halt the re-keying procedure (step 218). Put another way, the AMF 206 gives up the pending AS re-keying, and only initiates the emergency fallback procedure. This action could be standardized, for example, in Clause 6.9.2.2 of 3GPP TS 33.501 v16.1.0 which defines key derivations for the context modification procedure, or in Clause 6.9.5 of 3GPP TS 33.501 v16.1.0 which defines rules on concurrent running of security procedures. In this case, the AMF 206 could only indicate the Emergency Fallback Indicator IE and not indicate the Security Key IE in the NGAP UE Context Modification Request message 220 towards NG-RAN 204. Doing so is preferred since it reduces latency because intra-cell handover that would have been required for AS re-keying is skipped. Doing so is also acceptable from a security point of view since the new AS keys resulting from AS re-keying would not be long lasting because of subsequent IDLE state mobility. Therefore keeping the old AS keys for a short period of time is acceptable. Following the NGAP UE Context Modification Request message 220 towards NG-RAN 204, the NG-RAN 204 responds to the AMF 206 with a NGAP UE Context Modification Response message 222. Subsequently, in step 224, the NG-RAN 204 initiates Emergency Fallback Mobility by *Release with Re-Direct to E-UTRA or *Handover to E-UTRA.
   b. In a not claimed alternative solution, which is not shown in Fig. 2, the AMF 206 could take into account both the emergency fallback and the pending AS re-keying. This action could be also be standardized for example in Clause 6.9.5 of 3GPP TS 33.501 v16.1.0. In this case, the AMF 206 could indicate both the Emergency Fallback Indicator IE and the Security Key IE in the NGAP UE Context Modification Request message towards NG-RAN 204. One disadvantage of doing so is that the intra-cell handover required for AS re-keying introduces latency without any significant security benefit.

### NG-RAN behavior and Solution

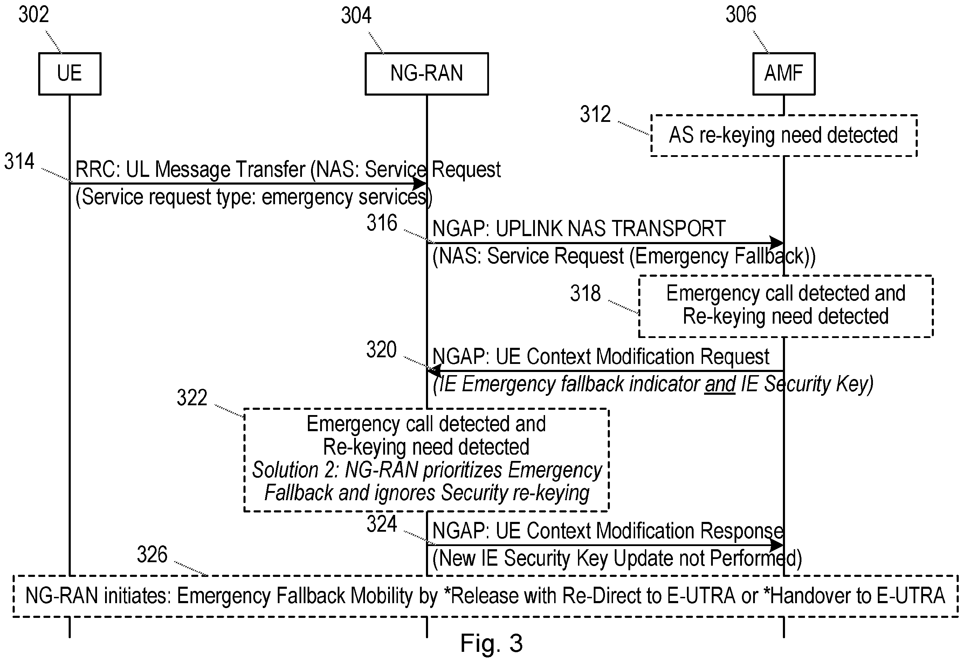

The signalling diagram in Fig. 3 illustrates an NG-RAN-based robust emergency fallback solution according to various embodiments. That is, the NG-RAN takes the action(s) required to handle emergency service fallback while the network was preparing to perform AS re-keying with the UE. Fig. 3 shows signalling between a UE 302, an NG-RAN 304 and an AMF 306.

In this section, reference to NG-RAN behaviour typically relates to behaviour of a gNB or ng-eNB. Steps 312 and 318 in the AMF 306 correspond generally to steps 212 and 218 in Fig. 2, and the Service Request NAS messages 314, 316 correspond generally to signals 214 and 216 in Fig. 2.
1. The NG-RAN 304 obtains an indication that UE context information needs to change. The NG-RAN 304 can obtain information about the UE context information change from the AMF 306 in a NGAP UE Context Modification Request message 320.
2. Further, at step 322, the NG-RAN 304 can obtain information if it is asked to perform both the AS re-keying and the emergency fallback.
   a. The NG-RAN 304 could obtain information about the AS re-keying by determining that the NGAP UE Context Modification Request message contains the Security Key IE.
   b. The NG-RAN 304 could obtain information about the emergency fallback by determining that the NGAP UE Context Modification Request message contains the Emergency Fallback Indicator IE.
3. Further, the NG-RAN 304 can obtain information of what action to take in this scenario.
   a. The information about the action could be defined as a standardized behavior in one or more 3GPP technical specifications like 3GPP TS 33.501, 3GPP TS 38.413, 3GPP TS 23.501, 3GPP TS 23.502.
   b. The NG-RAN 304 could obtain the information about the action from a local policy, e.g. a policy stored at or by the NG-RAN 304.
   c. The NG-RAN 304 could obtain the information about the action from a central storage or central database.
   d. The NG-RAN 304 could obtain the information about the action from another 3GPP network function or network node like AMF, SMF, PCF, UDM, NEF, UE, or another NG-RAN.
   e. The NG-RAN 304 could obtain the information about action from a non-3GPP network function or network node like AF.
4. Solutions from the NG-RAN 304 side:
   a. The NG-RAN 304, according to the invention, should take into account the emergency fallback and ignore the AS re-keying.

This solution can be specified in NGAP, for example in section 8.3.4 UE Context Modification, 3GPP TS 38.413, v16.0.0, stating that if the Emergency Fallback Indicator IE is included, the Security Key and/or the UE Security Capability shall be ignored, if they are also present. This could be specified in the procedural text, or in the semantic description in the tabular (sections 9.2.2.7-9.2.2.9, 3GPP TS 38.413 v16.0.0.

In this case, the NG-RAN 304 could perform a RRC release procedure with a redirect indication towards the UE 302. The RRC release message could be protected using the old (i.e. the existing, non-updated) AS security keys. Doing so is acceptable from a security point of view since new AS keys resulting from AS re-keying would not be long lasting because of subsequent IDLE state mobility. Therefore keeping the old AS keys for a short period of time (to protect the RRC release message) is acceptable.

This solution could also prevent unexpected behavior from poorly implemented/configured AMFs when such AMFs include both the AS re-keying and the emergency fallback indications in the NGAP UE Context Modification Request message, despite the standards or policy not allowing it.

As a further part of this solution, in step 322, the NG-RAN node 304 acts upon the emergency fallback indicator but ignores the AS-rekeying. The UE context modification procedure is successful, and in the response message sent from the NG-RAN node 304 to the AMF 306 (signal 324), the NG-RAN 304 can indicate explicitly or implicitly that the AS-rekeying is not (or was not) performed. The AMF 306 may take this information into account and perform a new AS security re-keying. This solution handles problems with backwards compatibility.

The below Table 1 shows an example of how the new "Security Key Update not performed" can be included in Chapter 9.2.2.8 UE CONTEXT MODIFICATION RESPONSE in 3GPP TS 38.413, v16.0.0.

**Table 1**

| **IE/Group Name** | **Presence** | **Range** | **IE type and reference** | **Semantics description** | **Criticality** | **Assigned Criticality** |
|---|---|---|---|---|---|---|
| Message Type | M | | 9.3.1.1 | | YES | reject |
| AMF UE NGAP ID | M | | 9.3.3.1 | | YES | ignore |
| RAN UE NGAP ID | M | | 9.3.3.2 | | YES | ignore |
| RRC State | O | | 9.3.1.92 | | YES | ignore |
| User Location Information | O | | 9.3.1.16 | | YES | ignore |
| Criticality Diagnostics | O | | 9.3.1.3 | | YES | ignore |
| Security Key Update not performed | O | | ENUMERATE D(true) | This IE indicate if the AS security update is not performed by NG-RAN node. | YES | reject |

b. Further, when the NG-RAN node 304 acts upon the emergency fallback Indicator and performs a release with redirect (step 326), it may ignore all the other UE context modification elements. The UE context modification procedure is successful, and in the response message sent from the NG-RAN node 304 to the AMF 306, the NG-RAN node 304 may indicate context modification is not performed, and release with redirect will take place. In a not claimed alternative solution, not shown in Fig. 3, the NG-RAN 304 could take into account both the emergency fallback and the AS re-keying. This action could be standardized, for example, in Clause 6.9.2.2 or Clause 6.9.5 of 3GPP TS 33.501, v16.1.0. In this case, the NG-RAN 304 could first perform an intra-cell handover with the UE to accomplish AS re-keying. This would generate new AS security keys. After that, the NG-RAN 304 could perform a RRC release procedure with a redirect indication towards the UE 302. The RRC release message could be protected using the new AS security keys. One disadvantage of this solution is that the intra-cell handover required for AS re-keying introduces latency without any significant security benefit.

c. In another alternative solution, if the NG-RAN node 304 decides to do a handover due to emergency fallback in the case that security rekeying is also required, the NG-RAN 304 can continue to use the old AS security key in order to shorten the handover preparation procedure. The NG-RAN 304 can indicate to the 5GC that the rekeying is not performed, and the modification procedure is successful. The 5GC would perform the AS security re-keying after the UE 302 is handed over to the target cell.

As noted above, the above 5GC (AMF) solution(s) can be used with a conventional NG-RAN. Likewise, as noted above, the above NG-RAN solution(s) can be used with a conventional 5GC (AMF). However, the above 5GC (AMF) solution(s) can be used at the same time as the above NG-RAN side solution(s) to gain robustness from different nodes.

### UE solutions

At the UE side, possible solutions include specifying that when the UE knows that AS re-keying is pending, and the UE has requested emergency fallback, the UE could:
1. ignore the AS re-keying, and act upon the RRC Release procedure; or
2. decide to abandon the current RRC connection and go to another appropriate cell itself (which can be another NG-RAN node or an E-UTRAN node).

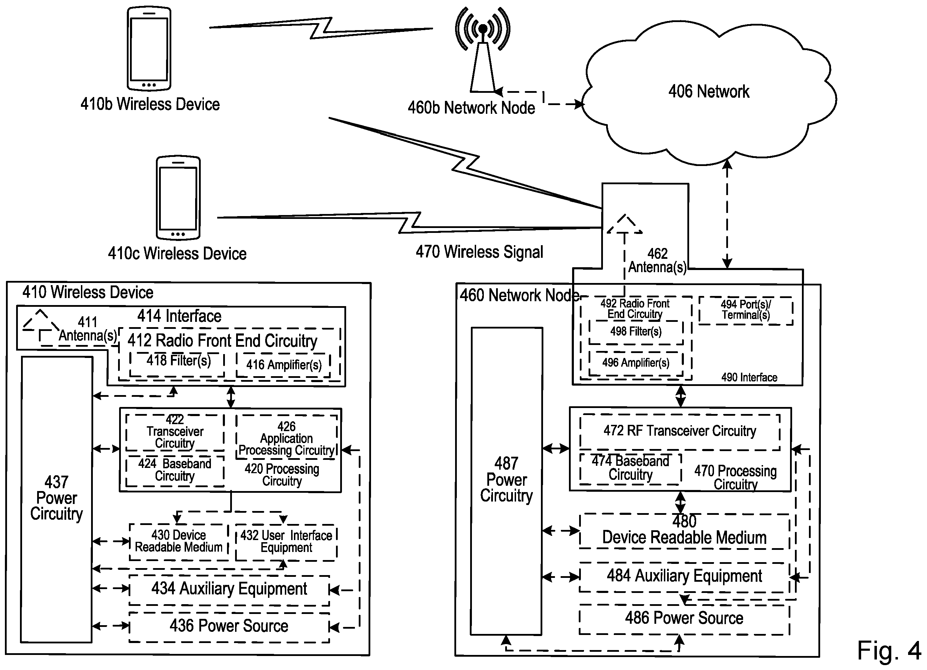

Although the subject matter described herein may be implemented in any appropriate type of system using any suitable components, the embodiments disclosed herein are described in relation to a wireless network, such as the example wireless network illustrated in Figure 4. For simplicity, the wireless network of Figure 4 only depicts network 406, network nodes 460 and 460b, and WDs 410, 410b, and 410c. In practice, a wireless network may further include any additional elements suitable to support communication between wireless devices or between a wireless device and another communication device, such as a landline telephone, a service provider, or any other network node or end device. Of the illustrated components, network node 460 and wireless device (WD) 410 are depicted with additional detail. The wireless network may provide communication and other types of services to one or more wireless devices to facilitate the wireless devices' access to and/or use of the services provided by, or via, the wireless network.

The wireless network may comprise and/or interface with any type of communication, telecommunication, data, cellular, and/or radio network or other similar type of system. In some embodiments, the wireless network may be configured to operate according to specific standards or other types of predefined rules or procedures. Thus, particular embodiments of the wireless network may implement communication standards, such as Global System for Mobile Communications (GSM), Universal Mobile Telecommunications System (UMTS), Long Term Evolution (LTE), and/or other suitable 2G, 3G, 4G, or 5G standards; wireless local area network (WLAN) standards, such as the IEEE 802.11 standards; and/or any other appropriate wireless communication standard, such as the Worldwide Interoperability for Microwave Access (WiMax), Bluetooth, Z-Wave and/or ZigBee standards.

Network 406 may comprise one or more backhaul networks, core networks, IP networks, public switched telephone networks (PSTNs), packet data networks, optical networks, wide-area networks (WANs), local area networks (LANs), wireless local area networks (WLANs), wired networks, wireless networks, metropolitan area networks, and other networks to enable communication between devices. In particular, network 406 can include a core network that includes a core network node, such as an AMF.

Network node 460 and WD 410 comprise various components described in more detail below. These components work together in order to provide network node and/or wireless device functionality, such as providing wireless connections in a wireless network. In different embodiments, the wireless network may comprise any number of wired or wireless networks, network nodes, base stations, controllers, wireless devices, relay stations, and/or any other components or systems that may facilitate or participate in the communication of data and/or signals whether via wired or wireless connections.

As used herein, network node refers to equipment capable, configured, arranged and/or operable to communicate directly or indirectly with a wireless device and/or with other network nodes or equipment in the wireless network to enable and/or provide wireless access to the wireless device and/or to perform other functions (e.g., administration) in the wireless network. Examples of network nodes include, but are not limited to, access points (APs) (e.g., radio access points), base stations (BSs) (e.g., radio base stations, Node Bs, evolved Node Bs (eNBs) and NR NodeBs (gNBs)). Base stations may be categorized based on the amount of coverage they provide (or, stated differently, their transmit power level) and may then also be referred to as femto base stations, pico base stations, micro base stations, or macro base stations. A base station may be a relay node or a relay donor node controlling a relay. A network node may also include one or more (or all) parts of a distributed radio base station such as centralized digital units and/or remote radio units (RRUs), sometimes referred to as Remote Radio Heads (RRHs). Such remote radio units may or may not be integrated with an antenna as an antenna integrated radio. Parts of a distributed radio base station may also be referred to as nodes in a distributed antenna system (DAS). Yet further examples of network nodes include multi-standard radio (MSR) equipment such as MSR BSs, network controllers such as radio network controllers (RNCs) or base station controllers (BSCs), base transceiver stations (BTSs), transmission points, transmission nodes, multi-cell/multicast coordination entities (MCEs), core network nodes (e.g., MSCs, MMEs), O&M nodes, OSS nodes, SON nodes, positioning nodes (e.g., E-SMLCs), and/or MDTs. As another example, a network node may be a virtual network node as described in more detail below. More generally, however, network nodes may represent any suitable device (or group of devices) capable, configured, arranged, and/or operable to enable and/or provide a wireless device with access to the wireless network or to provide some service to a wireless device that has accessed the wireless network.

In Figure 4, network node 460 includes processing circuitry 470, device readable medium 480, interface 490, auxiliary equipment 484, power source 486, power circuitry 487, and antenna 462. Although network node 460 illustrated in the example wireless network of Figure 4 may represent a device that includes the illustrated combination of hardware components, other embodiments may comprise network nodes with different combinations of components. It is to be understood that a network node comprises any suitable combination of hardware and/or software needed to perform the tasks, features, functions and methods disclosed herein. Moreover, while the components of network node 460 are depicted as single boxes located within a larger box, or nested within multiple boxes, in practice, a network node may comprise multiple different physical components that make up a single illustrated component (e.g., device readable medium 480 may comprise multiple separate hard drives as well as multiple RAM modules).

Similarly, network node 460 may be composed of multiple physically separate components (e.g., a NodeB component and a RNC component, or a BTS component and a BSC component, etc.), which may each have their own respective components. In certain scenarios in which network node 460 comprises multiple separate components (e.g., BTS and BSC components), one or more of the separate components may be shared among several network nodes. For example, a single RNC may control multiple NodeB's. In such a scenario, each unique NodeB and RNC pair, may in some instances be considered a single separate network node. In some embodiments, network node 460 may be configured to support multiple radio access technologies (RATs). In such embodiments, some components may be duplicated (e.g., separate device readable medium 480 for the different RATs) and some components may be reused (e.g., the same antenna 462 may be shared by the RATs). Network node 460 may also include multiple sets of the various illustrated components for different wireless technologies integrated into network node 460, such as, for example, GSM, WCDMA, LTE, NR, WiFi, or Bluetooth wireless technologies. These wireless technologies may be integrated into the same or different chip or set of chips and other components within network node 460.

Processing circuitry 470 is configured to perform any determining, calculating, or similar operations (e.g., certain obtaining operations) described herein as being provided by a network node. These operations performed by processing circuitry 470 may include processing information obtained by processing circuitry 470 by, for example, converting the obtained information into other information, comparing the obtained information or converted information to information stored in the network node, and/or performing one or more operations based on the obtained information or converted information, and as a result of said processing making a determination.

Processing circuitry 470 may comprise a combination of one or more of a microprocessor, controller, microcontroller, central processing unit, digital signal processor, application-specific integrated circuit, field programmable gate array, or any other suitable computing device, resource, or combination of hardware, software and/or encoded logic operable to provide, either alone or in conjunction with other network node 460 components, such as device readable medium 480, network node 460 functionality. For example, processing circuitry 470 may execute instructions stored in device readable medium 480 or in memory within processing circuitry 470. Such functionality may include providing any of the various wireless features, functions, or benefits discussed herein. In some embodiments, processing circuitry 470 may include a system on a chip (SOC).

In some embodiments, processing circuitry 470 may include one or more of radio frequency (RF) transceiver circuitry 472 and baseband processing circuitry 474. In some embodiments, radio frequency (RF) transceiver circuitry 472 and baseband processing circuitry 474 may be on separate chips (or sets of chips), boards, or units, such as radio units and digital units. In alternative embodiments, part or all of RF transceiver circuitry 472 and baseband processing circuitry 474 may be on the same chip or set of chips, boards, or units

In certain embodiments, some or all of the functionality described herein as being provided by a network node, base station, eNB or other such network device may be performed by processing circuitry 470 executing instructions stored on device readable medium 480 or memory within processing circuitry 470. In alternative embodiments, some or all of the functionality may be provided by processing circuitry 470 without executing instructions stored on a separate or discrete device readable medium, such as in a hard-wired manner. In any of those embodiments, whether executing instructions stored on a device readable storage medium or not, processing circuitry 470 can be configured to perform the described functionality. The benefits provided by such functionality are not limited to processing circuitry 470 alone or to other components of network node 460, but are enjoyed by network node 460 as a whole, and/or by end users and the wireless network generally.

Device readable medium 480 may comprise any form of volatile or non-volatile computer readable memory including, without limitation, persistent storage, solid-state memory, remotely mounted memory, magnetic media, optical media, random access memory (RAM), read-only memory (ROM), mass storage media (for example, a hard disk), removable storage media (for example, a flash drive, a Compact Disk (CD) or a Digital Video Disk (DVD)), and/or any other volatile or non-volatile, non-transitory device readable and/or computer-executable memory devices that store information, data, and/or instructions that may be used by processing circuitry 470. Device readable medium 480 may store any suitable instructions, data or information, including a computer program, software, an application including one or more of logic, rules, code, tables, etc. and/or other instructions capable of being executed by processing circuitry 470 and, utilized by network node 460. Device readable medium 480 may be used to store any calculations made by processing circuitry 470 and/or any data received via interface 490. In some embodiments, processing circuitry 470 and device readable medium 480 may be considered to be integrated.

Interface 490 is used in the wired or wireless communication of signalling and/or data between network node 460, network 406, and/or WDs 410. As illustrated, interface 490 comprises port(s)/terminal(s) 494 to send and receive data, for example to and from network 406 over a wired connection. Interface 490 also includes radio front end circuitry 492 that may be coupled to, or in certain embodiments a part of, antenna 462. Radio front end circuitry 492 comprises filters 498 and amplifiers 496. Radio front end circuitry 492 may be connected to antenna 462 and processing circuitry 470. Radio front end circuitry may be configured to condition signals communicated between antenna 462 and processing circuitry 470. Radio front end circuitry 492 may receive digital data that is to be sent out to other network nodes or WDs via a wireless connection. Radio front end circuitry 492 may convert the digital data into a radio signal having the appropriate channel and bandwidth parameters using a combination of filters 498 and/or amplifiers 496. The radio signal may then be transmitted via antenna 462. Similarly, when receiving data, antenna 462 may collect radio signals which are then converted into digital data by radio front end circuitry 492. The digital data may be passed to processing circuitry 470. In other embodiments, the interface may comprise different components and/or different combinations of components.

In certain alternative embodiments, network node 460 may not include separate radio front end circuitry 492, instead, processing circuitry 470 may comprise radio front end circuitry and may be connected to antenna 462 without separate radio front end circuitry 492. Similarly, in some embodiments, all or some of RF transceiver circuitry 472 may be considered a part of interface 490. In still other embodiments, interface 490 may include one or more ports or terminals 494, radio front end circuitry 492, and RF transceiver circuitry 472, as part of a radio unit (not shown), and interface 490 may communicate with baseband processing circuitry 474, which is part of a digital unit (not shown).

Antenna 462 may include one or more antennas, or antenna arrays, configured to send and/or receive wireless signals. Antenna 462 may be coupled to radio front end circuitry 490 and may be any type of antenna capable of transmitting and receiving data and/or signals wirelessly. In some embodiments, antenna 462 may comprise one or more omni-directional, sector or panel antennas operable to transmit/receive radio signals between, for example, 2 GHz and 66 GHz. An omni-directional antenna may be used to transmit/receive radio signals in any direction, a sector antenna may be used to transmit/receive radio signals from devices within a particular area, and a panel antenna may be a line of sight antenna used to transmit/receive radio signals in a relatively straight line. In some instances, the use of more than one antenna may be referred to as MIMO. In certain embodiments, antenna 462 may be separate from network node 460 and may be connectable to network node 460 through an interface or port.

Antenna 462, interface 490, and/or processing circuitry 470 may be configured to perform any receiving operations and/or certain obtaining operations described herein as being performed by a network node. Any information, data and/or signals may be received from a wireless device, another network node and/or any other network equipment. Similarly, antenna 462, interface 490, and/or processing circuitry 470 may be configured to perform any transmitting operations described herein as being performed by a network node. Any information, data and/or signals may be transmitted to a wireless device, another network node and/or any other network equipment.

Power circuitry 487 may comprise, or be coupled to, power management circuitry and is configured to supply the components of network node 460 with power for performing the functionality described herein. Power circuitry 487 may receive power from power source 486. Power source 486 and/or power circuitry 487 may be configured to provide power to the various components of network node 460 in a form suitable for the respective components (e.g., at a voltage and current level needed for each respective component). Power source 486 may either be included in, or external to, power circuitry 487 and/or network node 460. For example, network node 460 may be connectable to an external power source (e.g., an electricity outlet) via an input circuitry or interface such as an electrical cable, whereby the external power source supplies power to power circuitry 487. As a further example, power source 486 may comprise a source of power in the form of a battery or battery pack which is connected to, or integrated in, power circuitry 487. The battery may provide backup power should the external power source fail. Other types of power sources, such as photovoltaic devices, may also be used.

Alternative embodiments of network node 460 may include additional components beyond those shown in Figure 4 that may be responsible for providing certain aspects of the network node's functionality, including any of the functionality described herein and/or any functionality necessary to support the subject matter described herein. For example, network node 460 may include user interface equipment to allow input of information into network node 460 and to allow output of information from network node 460. This may allow a user to perform diagnostic, maintenance, repair, and other administrative functions for network node 460.

As used herein, wireless device (WD) refers to a device capable, configured, arranged and/or operable to communicate wirelessly with network nodes and/or other wireless devices. Unless otherwise noted, the term WD may be used interchangeably herein with user equipment (UE). Communicating wirelessly may involve transmitting and/or receiving wireless signals using electromagnetic waves, radio waves, infrared waves, and/or other types of signals suitable for conveying information through air. In some embodiments, a WD may be configured to transmit and/or receive information without direct human interaction. For instance, a WD may be designed to transmit information to a network on a predetermined schedule, when triggered by an internal or external event, or in response to requests from the network. Examples of a WD include, but are not limited to, a smart phone, a mobile phone, a cell phone, a voice over IP (VoIP) phone, a wireless local loop phone, a desktop computer, a personal digital assistant (PDA), a wireless cameras, a gaming console or device, a music storage device, a playback appliance, a wearable terminal device, a wireless endpoint, a mobile station, a tablet, a laptop, a laptop-embedded equipment (LEE), a laptop-mounted equipment (LME), a smart device, a wireless customer-premise equipment (CPE). a vehicle-mounted wireless terminal device, etc.. A WD may support device-to-device (D2D) communication, for example by implementing a 3GPP standard for sidelink communication, vehicle-to-vehicle (V2V), vehicle-to-infrastructure (V2I), vehicle-to-everything (V2X) and may in this case be referred to as a D2D communication device. As yet another specific example, in an Internet of Things (IoT) scenario, a WD may represent a machine or other device that performs monitoring and/or measurements, and transmits the results of such monitoring and/or measurements to another WD and/or a network node. The WD may in this case be a machine-to-machine (M2M) device, which may in a 3GPP context be referred to as an MTC device. As one particular example, the WD may be a UE implementing the 3GPP narrow band internet of things (NB-IoT) standard. Particular examples of such machines or devices are sensors, metering devices such as power meters, industrial machinery, or home or personal appliances (e.g. refrigerators, televisions, etc.) personal wearables (e.g., watches, fitness trackers, etc.). In other scenarios, a WD may represent a vehicle or other equipment that is capable of monitoring and/or reporting on its operational status or other functions associated with its operation. A WD as described above may represent the endpoint of a wireless connection, in which case the device may be referred to as a wireless terminal. Furthermore, a WD as described above may be mobile, in which case it may also be referred to as a mobile device or a mobile terminal.

As illustrated, wireless device 410 includes antenna 411, interface 414, processing circuitry 420, device readable medium 430, user interface equipment 432, auxiliary equipment 434, power source 436 and power circuitry 437. WD 410 may include multiple sets of one or more of the illustrated components for different wireless technologies supported by WD 410, such as, for example, GSM, WCDMA, LTE, NR, WiFi, WiMAX, or Bluetooth wireless technologies, just to mention a few. These wireless technologies may be integrated into the same or different chips or set of chips as other components within WD 410.

Antenna 411 may include one or more antennas or antenna arrays, configured to send and/or receive wireless signals, and is connected to interface 414. In certain alternative embodiments, antenna 411 may be separate from WD 410 and be connectable to WD 410 through an interface or port. Antenna 411, interface 414, and/or processing circuitry 420 may be configured to perform any receiving or transmitting operations described herein as being performed by a WD. Any information, data and/or signals may be received from a network node and/or another WD. In some embodiments, radio front end circuitry and/or antenna 411 may be considered an interface.

As illustrated, interface 414 comprises radio front end circuitry 412 and antenna 411. Radio front end circuitry 412 comprise one or more filters 418 and amplifiers 416. Radio front end circuitry 414 is connected to antenna 411 and processing circuitry 420, and is configured to condition signals communicated between antenna 411 and processing circuitry 420. Radio front end circuitry 412 may be coupled to or a part of antenna 411. In some embodiments, WD 410 may not include separate radio front end circuitry 412; rather, processing circuitry 420 may comprise radio front end circuitry and may be connected to antenna 411. Similarly, in some embodiments, some or all of RF transceiver circuitry 422 may be considered a part of interface 414. Radio front end circuitry 412 may receive digital data that is to be sent out to other network nodes or WDs via a wireless connection. Radio front end circuitry 412 may convert the digital data into a radio signal having the appropriate channel and bandwidth parameters using a combination of filters 418 and/or amplifiers 416. The radio signal may then be transmitted via antenna 411. Similarly, when receiving data, antenna 411 may collect radio signals which are then converted into digital data by radio front end circuitry 412. The digital data may be passed to processing circuitry 420. In other embodiments, the interface may comprise different components and/or different combinations of components.

Processing circuitry 420 may comprise a combination of one or more of a microprocessor, controller, microcontroller, central processing unit, digital signal processor, application-specific integrated circuit, field programmable gate array, or any other suitable computing device, resource, or combination of hardware, software, and/or encoded logic operable to provide, either alone or in conjunction with other WD 410 components, such as device readable medium 430, WD 410 functionality. Such functionality may include providing any of the various wireless features or benefits discussed herein. For example, processing circuitry 420 may execute instructions stored in device readable medium 430 or in memory within processing circuitry 420 to provide the functionality disclosed herein.

As illustrated, processing circuitry 420 includes one or more of RF transceiver circuitry 422, baseband processing circuitry 424, and application processing circuitry 426. In other embodiments, the processing circuitry may comprise different components and/or different combinations of components. In certain embodiments processing circuitry 420 of WD 410 may comprise a SOC. In some embodiments, RF transceiver circuitry 422, baseband processing circuitry 424, and application processing circuitry 426 may be on separate chips or sets of chips. In alternative embodiments, part or all of baseband processing circuitry 424 and application processing circuitry 426 may be combined into one chip or set of chips, and RF transceiver circuitry 422 may be on a separate chip or set of chips. In still alternative embodiments, part or all of RF transceiver circuitry 422 and baseband processing circuitry 424 may be on the same chip or set of chips, and application processing circuitry 426 may be on a separate chip or set of chips. In yet other alternative embodiments, part or all of RF transceiver circuitry 422, baseband processing circuitry 424, and application processing circuitry 426 may be combined in the same chip or set of chips. In some embodiments, RF transceiver circuitry 422 may be a part of interface 414. RF transceiver circuitry 422 may condition RF signals for processing circuitry 420.

In certain embodiments, some or all of the functionality described herein as being performed by a WD may be provided by processing circuitry 420 executing instructions stored on device readable medium 430, which in certain embodiments may be a computer-readable storage medium. In alternative embodiments, some or all of the functionality may be provided by processing circuitry 420 without executing instructions stored on a separate or discrete device readable storage medium, such as in a hard-wired manner. In any of those particular embodiments, whether executing instructions stored on a device readable storage medium or not, processing circuitry 420 can be configured to perform the described functionality. The benefits provided by such functionality are not limited to processing circuitry 420 alone or to other components of WD 410, but are enjoyed by WD 410 as a whole, and/or by end users and the wireless network generally.

Processing circuitry 420 may be configured to perform any determining, calculating, or similar operations (e.g., certain obtaining operations) described herein as being performed by a WD. These operations, as performed by processing circuitry 420, may include processing information obtained by processing circuitry 420 by, for example, converting the obtained information into other information, comparing the obtained information or converted information to information stored by WD 410, and/or performing one or more operations based on the obtained information or converted information, and as a result of said processing making a determination.

Device readable medium 430 may be operable to store a computer program, software, an application including one or more of logic, rules, code, tables, etc. and/or other instructions capable of being executed by processing circuitry 420. Device readable medium 430 may include computer memory (e.g., Random Access Memory (RAM) or Read Only Memory (ROM)), mass storage media (e.g., a hard disk), removable storage media (e.g., a Compact Disk (CD) or a Digital Video Disk (DVD)), and/or any other volatile or non-volatile, non-transitory device readable and/or computer executable memory devices that store information, data, and/or instructions that may be used by processing circuitry 420. In some embodiments, processing circuitry 420 and device readable medium 430 may be considered to be integrated.

User interface equipment 432 may provide components that allow for a human user to interact with WD 410. Such interaction may be of many forms, such as visual, audial, tactile, etc. User interface equipment 432 may be operable to produce output to the user and to allow the user to provide input to WD 410. The type of interaction may vary depending on the type of user interface equipment 432 installed in WD 410. For example, if WD 410 is a smart phone, the interaction may be via a touch screen; if WD 410 is a smart meter, the interaction may be through a screen that provides usage (e.g., the number of gallons used) or a speaker that provides an audible alert (e.g., if smoke is detected). User interface equipment 432 may include input interfaces, devices and circuits, and output interfaces, devices and circuits. User interface equipment 432 is configured to allow input of information into WD 410, and is connected to processing circuitry 420 to allow processing circuitry 420 to process the input information. User interface equipment 432 may include, for example, a microphone, a proximity or other sensor, keys/buttons, a touch display, one or more cameras, a USB port, or other input circuitry. User interface equipment 432 is also configured to allow output of information from WD 410, and to allow processing circuitry 420 to output information from WD 410. User interface equipment 432 may include, for example, a speaker, a display, vibrating circuitry, a USB port, a headphone interface, or other output circuitry. Using one or more input and output interfaces, devices, and circuits, of user interface equipment 432, WD 410 may communicate with end users and/or the wireless network, and allow them to benefit from the functionality described herein.

Auxiliary equipment 434 is operable to provide more specific functionality which may not be generally performed by WDs. This may comprise specialized sensors for doing measurements for various purposes, interfaces for additional types of communication such as wired communications etc. The inclusion and type of components of auxiliary equipment 434 may vary depending on the embodiment and/or scenario.

Power source 436 may, in some embodiments, be in the form of a battery or battery pack. Other types of power sources, such as an external power source (e.g., an electricity outlet), photovoltaic devices or power cells, may also be used. WD 410 may further comprise power circuitry 437 for delivering power from power source 436 to the various parts of WD 410 which need power from power source 436 to carry out any functionality described or indicated herein. Power circuitry 437 may in certain embodiments comprise power management circuitry. Power circuitry 437 may additionally or alternatively be operable to receive power from an external power source; in which case WD 410 may be connectable to the external power source (such as an electricity outlet) via input circuitry or an interface such as an electrical power cable. Power circuitry 437 may also in certain embodiments be operable to deliver power from an external power source to power source 436. This may be, for example, for the charging of power source 436. Power circuitry 437 may perform any formatting, converting, or other modification to the power from power source 436 to make the power suitable for the respective components of WD 410 to which power is supplied.

Where network 406 includes a core network node, such as an AMF, the core network node can comprise various components similar to the components in the network node 460. These components work together in order to provide core network node functionality as described herein. For example, a core network node can include components similar to processing circuitry 470, device readable medium 480, interface 490, auxiliary equipment 484, power source 486 and/or power circuitry 487 described above.

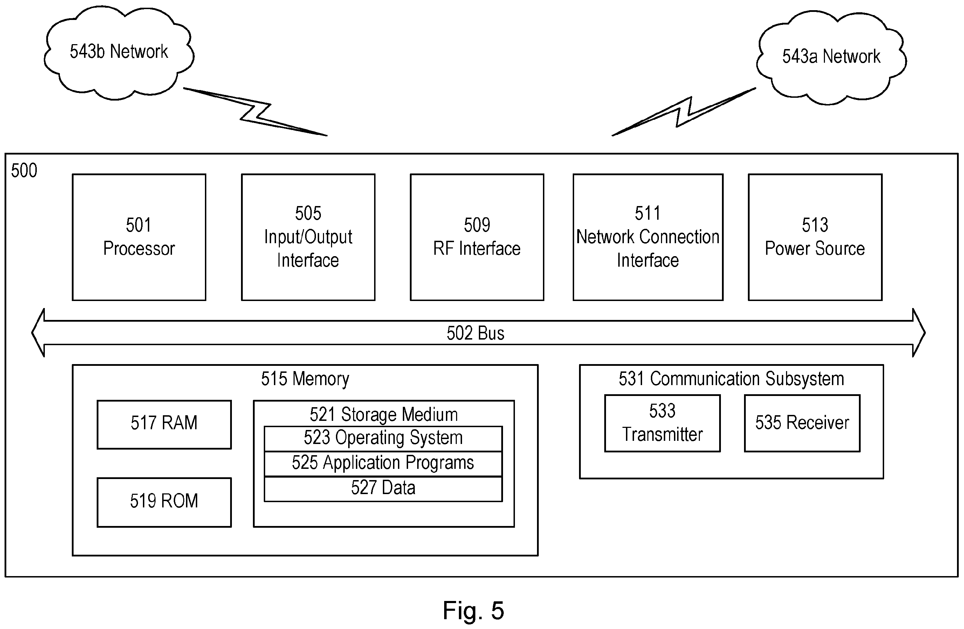

Figure 5 illustrates one embodiment of a UE in accordance with various aspects described herein. As used herein, a user equipment or UE may not necessarily have a user in the sense of a human user who owns and/or operates the relevant device. Instead, a UE may represent a device that is intended for sale to, or operation by, a human user but which may not, or which may not initially, be associated with a specific human user (e.g., a smart sprinkler controller). Alternatively, a UE may represent a device that is not intended for sale to, or operation by, an end user but which may be associated with or operated for the benefit of a user (e.g., a smart power meter). UE 500 may be any UE identified by the 3^{rd} Generation Partnership Project (3GPP), including a NB-loT UE, a machine type communication (MTC) UE, and/or an enhanced MTC (eMTC) UE. UE 500, as illustrated in Figure 5, is one example of a WD configured for communication in accordance with one or more communication standards promulgated by the 3^{rd} Generation Partnership Project (3GPP), such as 3GPP's GSM, UMTS, LTE, and/or 5G standards. As mentioned previously, the term WD and UE may be used interchangeable. Accordingly, although Figure 5 is a UE, the components discussed herein are equally applicable to a WD, and vice-versa.

In Figure 5, UE 500 includes processing circuitry 501 that is operatively coupled to input/output interface 505, radio frequency (RF) interface 509, network connection interface 511, memory 515 including random access memory (RAM) 517, read-only memory (ROM) 519, and storage medium 521 or the like, communication subsystem 531, power source 533, and/or any other component, or any combination thereof. Storage medium 521 includes operating system 523, application program 525, and data 527. In other embodiments, storage medium 521 may include other similar types of information. Certain UEs may utilize all of the components shown in Figure 5, or only a subset of the components. The level of integration between the components may vary from one UE to another UE. Further, certain UEs may contain multiple instances of a component, such as multiple processors, memories, transceivers, transmitters, receivers, etc.

In Figure 5, processing circuitry 501 may be configured to process computer instructions and data. Processing circuitry 501 may be configured to implement any sequential state machine operative to execute machine instructions stored as machine-readable computer programs in the memory, such as one or more hardware-implemented state machines (e.g., in discrete logic, FPGA, ASIC, etc.); programmable logic together with appropriate firmware; one or more stored program, general-purpose processors, such as a microprocessor or Digital Signal Processor (DSP), together with appropriate software; or any combination of the above. For example, the processing circuitry 501 may include two central processing units (CPUs). Data may be information in a form suitable for use by a computer.

In the depicted embodiment, input/output interface 505 may be configured to provide a communication interface to an input device, output device, or input and output device. UE 500 may be configured to use an output device via input/output interface 505. An output device may use the same type of interface port as an input device. For example, a USB port may be used to provide input to and output from UE 500. The output device may be a speaker, a sound card, a video card, a display, a monitor, a printer, an actuator, an emitter, a smartcard, another output device, or any combination thereof. UE 500 may be configured to use an input device via input/output interface 505 to allow a user to capture information into UE 500. The input device may include a touch-sensitive or presence-sensitive display, a camera (e.g., a digital camera, a digital video camera, a web camera, etc.), a microphone, a sensor, a mouse, a trackball, a directional pad, a trackpad, a scroll wheel, a smartcard, and the like. The presence-sensitive display may include a capacitive or resistive touch sensor to sense input from a user. A sensor may be, for instance, an accelerometer, a gyroscope, a tilt sensor, a force sensor, a magnetometer, an optical sensor, a proximity sensor, another like sensor, or any combination thereof. For example, the input device may be an accelerometer, a magnetometer, a digital camera, a microphone, and an optical sensor.

In Figure 5, RF interface 509 may be configured to provide a communication interface to RF components such as a transmitter, a receiver, and an antenna. Network connection interface 511 may be configured to provide a communication interface to network 543a. Network 543a may encompass wired and/or wireless networks such as a local-area network (LAN), a wide-area network (WAN), a computer network, a wireless network, a telecommunications network, another like network or any combination thereof. For example, network 543a may comprise a Wi-Fi network. Network connection interface 511 may be configured to include a receiver and a transmitter interface used to communicate with one or more other devices over a communication network according to one or more communication protocols, such as Ethernet, TCP/IP, SONET, ATM, or the like. Network connection interface 511 may implement receiver and transmitter functionality appropriate to the communication network links (e.g., optical, electrical, and the like). The transmitter and receiver functions may share circuit components, software or firmware, or alternatively may be implemented separately.

RAM 517 may be configured to interface via bus 502 to processing circuitry 501 to provide storage or caching of data or computer instructions during the execution of software programs such as the operating system, application programs, and device drivers. ROM 519 may be configured to provide computer instructions or data to processing circuitry 501. For example, ROM 519 may be configured to store invariant low-level system code or data for basic system functions such as basic input and output (I/O), startup, or reception of keystrokes from a keyboard that are stored in a non-volatile memory. Storage medium 521 may be configured to include memory such as RAM, ROM, programmable read-only memory (PROM), erasable programmable read-only memory (EPROM), electrically erasable programmable read-only memory (EEPROM), magnetic disks, optical disks, floppy disks, hard disks, removable cartridges, or flash drives. In one example, storage medium 521 may be configured to include operating system 523, application program 525 such as a web browser application, a widget or gadget engine or another application, and data file 527. Storage medium 521 may store, for use by UE 500, any of a variety of various operating systems or combinations of operating systems.

Storage medium 521 may be configured to include a number of physical drive units, such as redundant array of independent disks (RAID), floppy disk drive, flash memory, USB flash drive, external hard disk drive, thumb drive, pen drive, key drive, high-density digital versatile disc (HD-DVD) optical disc drive, internal hard disk drive, Blu-Ray optical disc drive, holographic digital data storage (HDDS) optical disc drive, external mini-dual in-line memory module (DIMM), synchronous dynamic random access memory (SDRAM), external micro-DIMM SDRAM, smartcard memory such as a subscriber identity module or a removable user identity (SIM/RUIM) module, other memory, or any combination thereof. Storage medium 521 may allow UE 500 to access computer-executable instructions, application programs or the like, stored on transitory or non-transitory memory media, to off-load data, or to upload data. An article of manufacture, such as one utilizing a communication system may be tangibly embodied in storage medium 521, which may comprise a device readable medium.

In Figure 5, processing circuitry 501 may be configured to communicate with network 543b using communication subsystem 531. Network 543a and network 543b may be the same network or networks or different network or networks. Communication subsystem 531 may be configured to include one or more transceivers used to communicate with network 543b. For example, communication subsystem 531 may be configured to include one or more transceivers used to communicate with one or more remote transceivers of another device capable of wireless communication such as another WD, UE, or base station of a radio access network (RAN) according to one or more communication protocols, such as IEEE 802.11, CDMA, WCDMA, GSM, LTE, UTRAN, WiMax, or the like. Each transceiver may include transmitter 533 and/or receiver 535 to implement transmitter or receiver functionality, respectively, appropriate to the RAN links (e.g., frequency allocations and the like). Further, transmitter 533 and receiver 535 of each transceiver may share circuit components, software or firmware, or alternatively may be implemented separately.

In the illustrated embodiment, the communication functions of communication subsystem 531 may include data communication, voice communication, multimedia communication, short-range communications such as Bluetooth, near-field communication, location-based communication such as the use of the global positioning system (GPS) to determine a location, another like communication function, or any combination thereof. For example, communication subsystem 531 may include cellular communication, Wi-Fi communication, Bluetooth communication, and GPS communication. Network 543b may encompass wired and/or wireless networks such as a local-area network (LAN), a wide-area network (WAN), a computer network, a wireless network, a telecommunications network, another like network or any combination thereof. For example, network 543b may be a cellular network, a Wi-Fi network, and/or a near-field network. Power source 513 may be configured to provide alternating current (AC) or direct current (DC) power to components of UE 500.

The features, benefits and/or functions described herein may be implemented in one of the components of UE 500 or partitioned across multiple components of UE 500. Further, the features, benefits, and/or functions described herein may be implemented in any combination of hardware, software or firmware. In one example, communication subsystem 531 may be configured to include any of the components described herein. Further, processing circuitry 501 may be configured to communicate with any of such components over bus 502. In another example, any of such components may be represented by program instructions stored in memory that when executed by processing circuitry 501 perform the corresponding functions described herein. In another example, the functionality of any of such components may be partitioned between processing circuitry 501 and communication subsystem 531. In another example, the non-computationally intensive functions of any of such components may be implemented in software or firmware and the computationally intensive functions may be implemented in hardware.

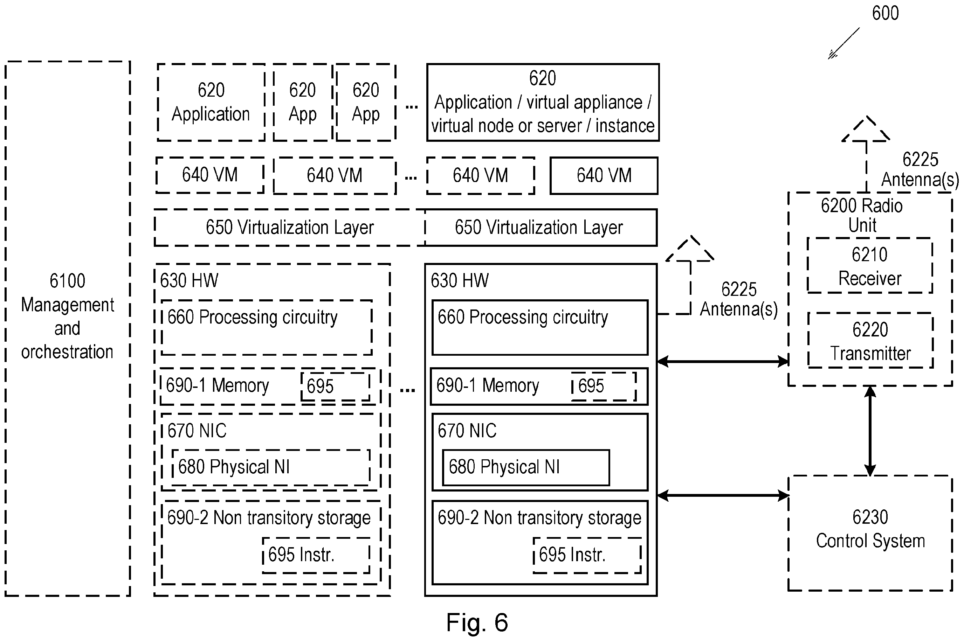

Figure 6 is a schematic block diagram illustrating a virtualization environment 600 in which functions implemented by some embodiments may be virtualized. In the present context, virtualizing means creating virtual versions of apparatuses or devices which may include virtualizing hardware platforms, storage devices and networking resources. As used herein, virtualization can be applied to a node (e.g., a virtualized base station or a virtualized radio access node or a virtualized core network node) or to a device (e.g., a UE, a wireless device or any other type of communication device) or components thereof and relates to an implementation in which at least a portion of the functionality is implemented as one or more virtual components (e.g., via one or more applications, components, functions, virtual machines or containers executing on one or more physical processing nodes in one or more networks).

In some embodiments, some or all of the functions described herein may be implemented as virtual components executed by one or more virtual machines implemented in one or more virtual environments 600 hosted by one or more of hardware nodes 630. Further, in embodiments in which the virtual node is not a radio access node or does not require radio connectivity (e.g., a core network node), then the network node may be entirely virtualized.

The functions may be implemented by one or more applications 620 (which may alternatively be called software instances, virtual appliances, network functions, virtual nodes, virtual network functions, etc.) operative to implement some of the features, functions, and/or benefits of some of the embodiments disclosed herein. Applications 620 are run in virtualization environment 600 which provides hardware 630 comprising processing circuitry 660 and memory 690. Memory 690 contains instructions 695 executable by processing circuitry 660 whereby application 620 is operative to provide one or more of the features, benefits, and/or functions disclosed herein.

Virtualization environment 600, comprises general-purpose or special-purpose network hardware devices 630 comprising a set of one or more processors or processing circuitry 660, which may be commercial off-the-shelf (COTS) processors, dedicated Application Specific Integrated Circuits (ASICs), or any other type of processing circuitry including digital or analog hardware components or special purpose processors. Each hardware device may comprise memory 690-1 which may be non-persistent memory for temporarily storing instructions 695 or software executed by processing circuitry 660. Each hardware device may comprise one or more network interface controllers (NICs) 670, also known as network interface cards, which include physical network interface 680. Each hardware device may also include non-transitory, persistent, machine-readable storage media 690-2 having stored therein software 695 and/or instructions executable by processing circuitry 660. Software 695 may include any type of software including software for instantiating one or more virtualization layers 650 (also referred to as hypervisors), software to execute virtual machines 640 as well as software allowing it to execute functions, features and/or benefits described in relation with some embodiments described herein.

Virtual machines 640, comprise virtual processing, virtual memory, virtual networking or interface and virtual storage, and may be run by a corresponding virtualization layer 650 or hypervisor. Different embodiments of the instance of virtual appliance 620 may be implemented on one or more of virtual machines 640, and the implementations may be made in different ways.

During operation, processing circuitry 660 executes software 695 to instantiate the hypervisor or virtualization layer 650, which may sometimes be referred to as a virtual machine monitor (VMM). Virtualization layer 650 may present a virtual operating platform that appears like networking hardware to virtual machine 640.

As shown in Figure 6, hardware 630 may be a standalone network node with generic or specific components. Hardware 630 may comprise antenna 6225 and may implement some functions via virtualization. Alternatively, hardware 630 may be part of a larger cluster of hardware (e.g. such as in a data center or customer premise equipment (CPE)) where many hardware nodes work together and are managed via management and orchestration (MANO) 6100, which, among others, oversees lifecycle management of applications 620.

Virtualization of the hardware is in some contexts referred to as network function virtualization (NFV). NFV may be used to consolidate many network equipment types onto industry standard high volume server hardware, physical switches, and physical storage, which can be located in data centers, and customer premise equipment.

In the context of NFV, virtual machine 640 may be a software implementation of a physical machine that runs programs as if they were executing on a physical, non-virtualized machine. Each of virtual machines 640, and that part of hardware 630 that executes that virtual machine, be it hardware dedicated to that virtual machine and/or hardware shared by that virtual machine with others of the virtual machines 640, forms a separate virtual network elements (VNE).

Still in the context of NFV, Virtual Network Function (VNF) is responsible for handling specific network functions that run in one or more virtual machines 640 on top of hardware networking infrastructure 630 and corresponds to application 620 in Figure 6.

In some embodiments, one or more radio units 6200 that each include one or more transmitters 6220 and one or more receivers 6210 may be coupled to one or more antennas 6225. Radio units 6200 may communicate directly with hardware nodes 630 via one or more appropriate network interfaces and may be used in combination with the virtual components to provide a virtual node with radio capabilities, such as a radio access node or a base station.

In some embodiments, some signalling can be effected with the use of control system 6230 which may alternatively be used for communication between the hardware nodes 630 and radio units 6200.

Any appropriate steps, methods, features, functions, or benefits disclosed herein may be performed through one or more functional units or modules of one or more virtual apparatuses. Each virtual apparatus may comprise a number of these functional units. These functional units may be implemented via processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory (RAM), cache memory, flash memory devices, optical storage devices, etc. Program code stored in memory includes program instructions for executing one or more telecommunications and/or data communications protocols as well as instructions for carrying out one or more of the techniques described herein. In some implementations, the processing circuitry may be used to cause the respective functional unit to perform corresponding functions according one or more embodiments of the present disclosure.

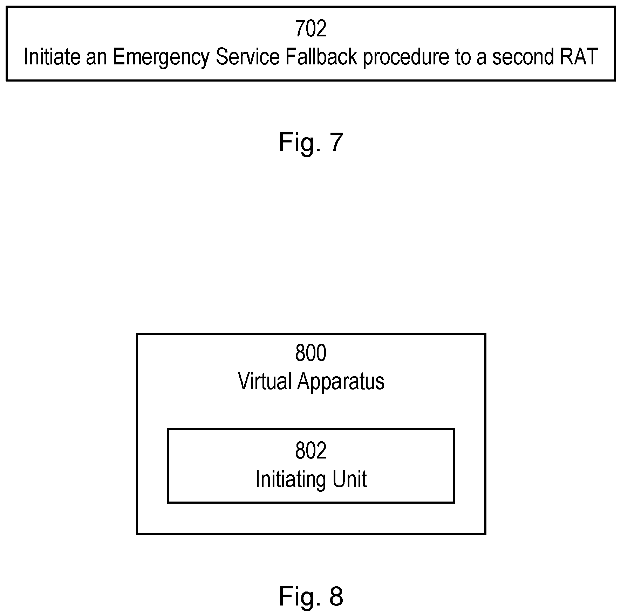

Fig. 7 is a flow chart illustrating a method in accordance with some embodiments. This method can be performed by a RAN node, such as an NG-RAN node, a CN node, such as an AMF, and/or a wireless device, such as a UE. The method can be performed when an update to a first security configuration between a wireless device and a first RAN node is to be updated, and an emergency session (e.g. an Emergency Service or Emergency Service Fallback) is required by the wireless device. In this method, at step 702 an Emergency Service Fallback procedure to a second RAT is initiated.

Figure 8 illustrates a schematic block diagram of an apparatus 800 in a wireless network (for example, the wireless network shown in Figure 4). The apparatus may be implemented in a wireless device or network node (e.g., wireless device 410 or network node 460 shown in Figure 4 or a core network node in network 406). Apparatus 800 is operable to carry out the example method described with reference to Figure 7 and possibly any other processes or methods disclosed herein. It is also to be understood that the method of Figure 7 is not necessarily carried out solely by apparatus 800. At least some operations of the method can be performed by one or more other entities.

Virtual Apparatus 800 may comprise processing circuitry, which may include one or more microprocessor or microcontrollers, as well as other digital hardware, which may include digital signal processors (DSPs), special-purpose digital logic, and the like. The processing circuitry may be configured to execute program code stored in memory, which may include one or several types of memory such as read-only memory (ROM), random-access memory, cache memory, flash memory devices, optical storage devices, etc. Program code stored in memory includes program instructions for executing one or more telecommunications and/or data communications protocols as well as instructions for carrying out one or more of the techniques described herein, in several embodiments. In some implementations, the processing circuitry may be used to cause initiating unit 802, and any other suitable units of apparatus 800 to perform corresponding functions according one or more embodiments of the present disclosure.

As illustrated in Figure 8, apparatus 800 includes initiator unit 802. The initiator unit 802 is configured to initiate an Emergency Service Fallback procedure to a second RAT.

The term unit may have conventional meaning in the field of electronics, electrical devices and/or electronic devices and may include, for example, electrical and/or electronic circuitry, devices, modules, processors, memories, logic solid state and/or discrete devices, computer programs or instructions for carrying out respective tasks, procedures, computations, outputs, and/or displaying functions, and so on, as such as those that are described herein.

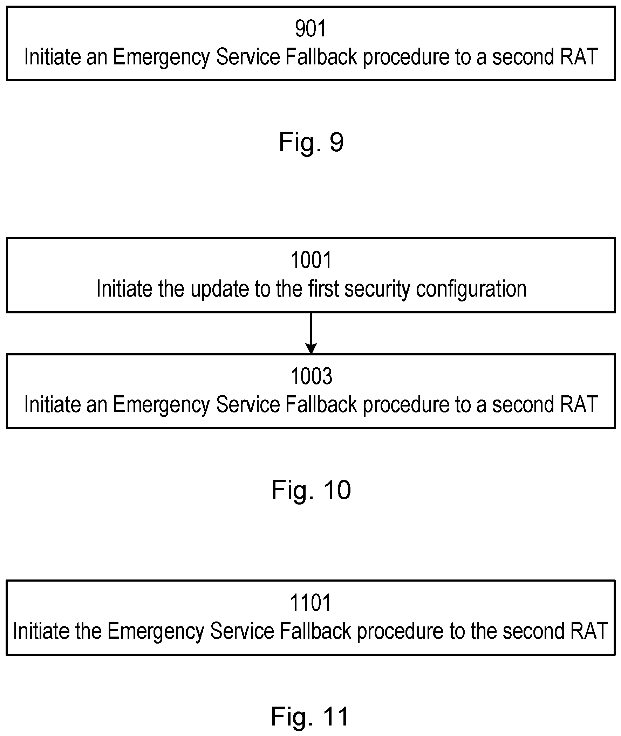

Fig. 9 is a flow chart illustrating a method performed by a first core network (CN) node in a telecommunication network in accordance with some embodiments. The telecommunication network comprises a first radio access network (RAN) node that operates according to a first radio access technology (RAT). The first RAT may be New Radio (NR). The first CN node may be an AMF.

An update to a first security configuration between a wireless device (e.g. a UE) and the first RAN node is required, In step 901, which occurs after the first CN node receives a request from the wireless device for an emergency session so that the wireless device can establish an emergency call, the first CN node initiates an Emergency Service Fallback procedure to a second RAT. The second RAT may be Universal Terrestrial Radio Access Network (UTRAN) or Evolved UTRAN (E-UTRAN).

The emergency call may be an emergency voice call. In some embodiments, the emergency call may be a voice call to a designated emergency telephone number.

The update to the first security configuration can be an AS re-keying.

In some embodiments, step 901 comprises sending a first message to the first RAN node. The first message indicates that an Emergency Service Fallback procedure is required. In these embodiments, the first message may comprise an Emergency Fallback Indicator information element (IE) that indicates that an Emergency Service Fallback procedure is required. The first message may be a context modification message for the wireless device. The first message may be is a UE Context Modification Request message.

In some embodiments, the first message does not indicate that an update to the first security configuration is required. This can mean that the first message does not comprise a Security Key IE or a UE Security Capability IE. Alternatively this can mean that the first message comprises a Security Key IE or a UE Security Capability IE and a second IE indicating that the value of the Security Key IE or the UE Security Capability IE is to be ignored by the first RAN node.

According to the invention, the method further comprises ignoring the update to the first security configuration.

In some embodiments, the method further comprises receiving the request from the wireless device for the emergency session. The received request may be a Service Request Non-Access-Stratum (NAS) message comprising a Service type value indicating fallback. The request for the emergency session may be a request for an Emergency Service or Emergency Service Fallback. The request for the emergency session may be a request for fallback to the second RAT.

In some embodiments, prior to initiating the Emergency Service Fallback procedure in step 901, the method further comprises, determining that an update to the first security configuration is required. The step of determining that an update to the first security configuration is required can comprise determining that the first CN node has not yet performed a context modification procedure following activation of a second security configuration between the wireless device and the first CN node. The second security configuration may comprise a NAS security context. The NAS security context may comprise at least one of: a NAS security key, NAS security algorithms, a NAS uplink count, a NAS downlink count, security capabilities, and a key set identifier.

In some embodiments, the method further comprises, after receiving the request, determining that the Emergency Service Fallback procedure to the second RAT is to be initiated. The step of determining that the Emergency Service Fallback procedure to the second RAT is to be initiated can be performed based on one or more of: information in a local policy or a policy stored at or by the first CN node; information stored in a database or memory; information received from another CN node in the telecommunication network; information received from the first RAN node, a second RAN node operating according to the second RAT, another RAN node in the telecommunication network, the wireless device or another wireless device; or information received from a network function (NF) or an application function (AF).

In some embodiments, the method further comprises receiving a second message from the first RAN node. The second message indicates that the update of the first security configuration was not performed.

In some embodiments, the first security configuration comprises an access-stratum (AS) security context. The AS security context may comprise at least one of: an AS security key, an AS security algorithm, an AS uplink count, an AS downlink count, security capabilities, a key chain counter, a user plane, and a security policy.

Fig. 10 is a flow chart illustrating an alternative method performed by a first CN node in a telecommunication network in accordance with some embodiments. The telecommunication network comprises a first RAN node that operates according to a first RAT. The first RAT may be NR. The first CN node may be an AMF.

In step 1001, after receiving a request from the wireless device for an emergency session so that the wireless device can establish an emergency call, the first CN node initiates the update to the first security configuration. The update to the first security configuration can be an AS re-keying.

Step 1003 comprises initiating an Emergency Service Fallback procedure to a second RAT. The second RAT may be UTRAN or E-UTRAN.

The emergency call may be an emergency voice call. In some embodiments, the emergency call may be a voice call to a designated emergency telephone number. Fig. 11 is a flow chart illustrating a method performed by a first RAN node that operates according to a first RAT in a telecommunication network according to some embodiments. The first RAN node can be a Next Generation Node B (gNB) or a Next Generation evolved Node B (NG-eNB). The first RAT may be NR.

In step 1101, which occurs after receiving a first message from a CN node in the telecommunication network (the first message indicating an update to a first security configuration between a wireless device and the first RAN node is required and that an Emergency Service Fallback procedure to a second RAT is to be performed so that the wireless device can establish an emergency call via the second RAT), the first RAN node initiates the Emergency Service Fallback procedure to the second RAT. The second RAT may be UTRAN or E-UTRAN. The wireless device may be a UE.

In some embodiments, step 1101 comprises initiating a release procedure with an indication that the wireless device is to redirect to the second RAT. The release procedure may be initiated using a third message that is protected using an AS security context comprised in the first security configuration.

In alternative embodiments, step 1101 comprises initiating handover to the second RAT. The handover to the second RAT may use an AS context comprised in the first security configuration.

The first message may comprise an Emergency Fallback Indicator IE that indicates that an Emergency Service Fallback procedure is required. The first message may be a context modification message for the wireless device, for example a UE Context Modification Request message.

The first message can indicate the update to the first security configuration is required using a Security Key IE or a UE Security Capability IE.

The first security configuration may comprise an AS security context. The AS security context can comprise at least one of: an AS security key, an AS security algorithm, an AS uplink count, an AS downlink count, security capabilities, and a key set identifier.

The update to the first security configuration may be an AS re-keying.

According to the invention, the method further comprises ignoring the requirement to update to the first security configuration.

In some embodiments, the first message comprises a Security Key IE or a UE Security Capability IE and a second IE indicating that the value of the Security Key IE or the UE Security Capability IE is to be ignored by the first RAN node.

In some embodiments, prior to step 1101, the method further comprises receiving a request from the wireless device for an emergency session.

In some embodiments, prior to step 1101, the method further comprises determining that an update to the first security configuration is required.

In some embodiments, the method further comprises determining that the Emergency Service Fallback procedure to the second RAT is to be initiated after receiving the first message from the CN node. This step can be performed based on one or more of: information in a local policy or a policy stored at or by the first RAN node; information stored in a database or memory; information received from another RAN node in the telecommunication network; information received from the first CN node, a second RAN node operating according to the second RAT, another RAN node in the telecommunication network, the wireless device or another wireless device; or information received from a NF or an AF.

In some embodiments, the method further comprises sending a second message to the first CN node. The second message indicates that the update of the first security configuration was not performed. The second message may be a context modification message for the wireless device. The second message may be a UE Context Modification Response.

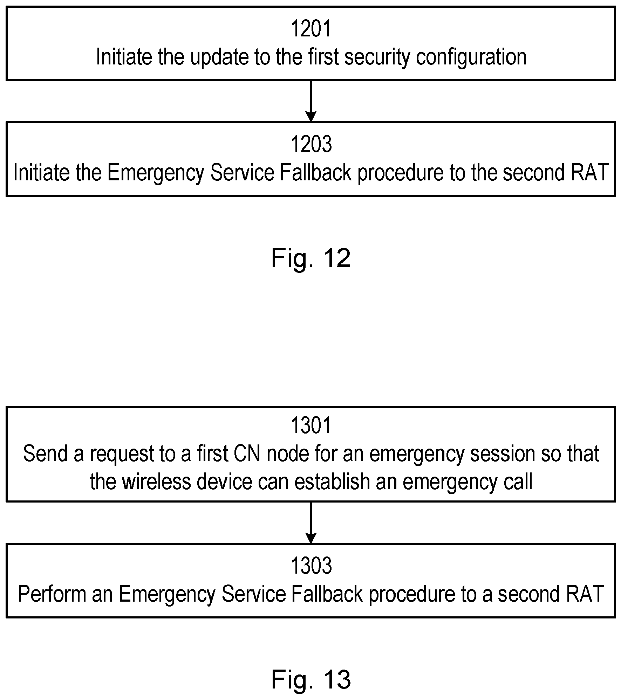

Fig. 12 is a flow chart illustrating an alternative method performed by a first RAN node that operates according to a first RAT in a telecommunication network according to some embodiments. The first RAN node can be a gNB or a NG-eNB. The first RAT may be NR.

In step 1201, which occurs after receiving a first message from a CN node in the telecommunication network (the first message indicating an update to a first security configuration between a wireless device and the first RAN node is required and that an Emergency Service Fallback procedure to a second RAT is to be performed so that the wireless device can establish an emergency call via the second RAT), the first RAN node initiates the update to the first security configuration.

In step 1203, the first RAN node initiates the Emergency Service Fallback procedure to the second RAT. The second RAT may be UTRAN or E-UTRAN. The wireless device may be a UE.

Fig. 13 is a flow chart illustrating a method performed by a wireless device (e.g. a UE) according to some embodiments. The method is performed when an update to a first security configuration between the wireless device and a first RAN node that operates according to a first RAT is required. The first RAN node can be a gNB or a NG-eNB. The first RAT may be NR.

In step 1301, the wireless device sends a request to a first CN node in a telecommunication network for an emergency session so that the wireless device can establish an emergency call.

In step 1303, the wireless device performs an Emergency Service Fallback procedure to a second RAT. The second RAT may be UTRAN or E-UTRAN.

According to the invention, the method further comprises ignoring the required update to the first security configuration while performing the Emergency Service Fallback procedure.

Step 1303 may comprise disconnecting from the first RAT and attaching to the second RAT. Alternatively, step 1303 can comprise receiving a release message from the first RAN node, the release message indicating that the wireless device is to redirect to the second RAT.

The following Change Request document describes some further examples of the techniques presented herein.

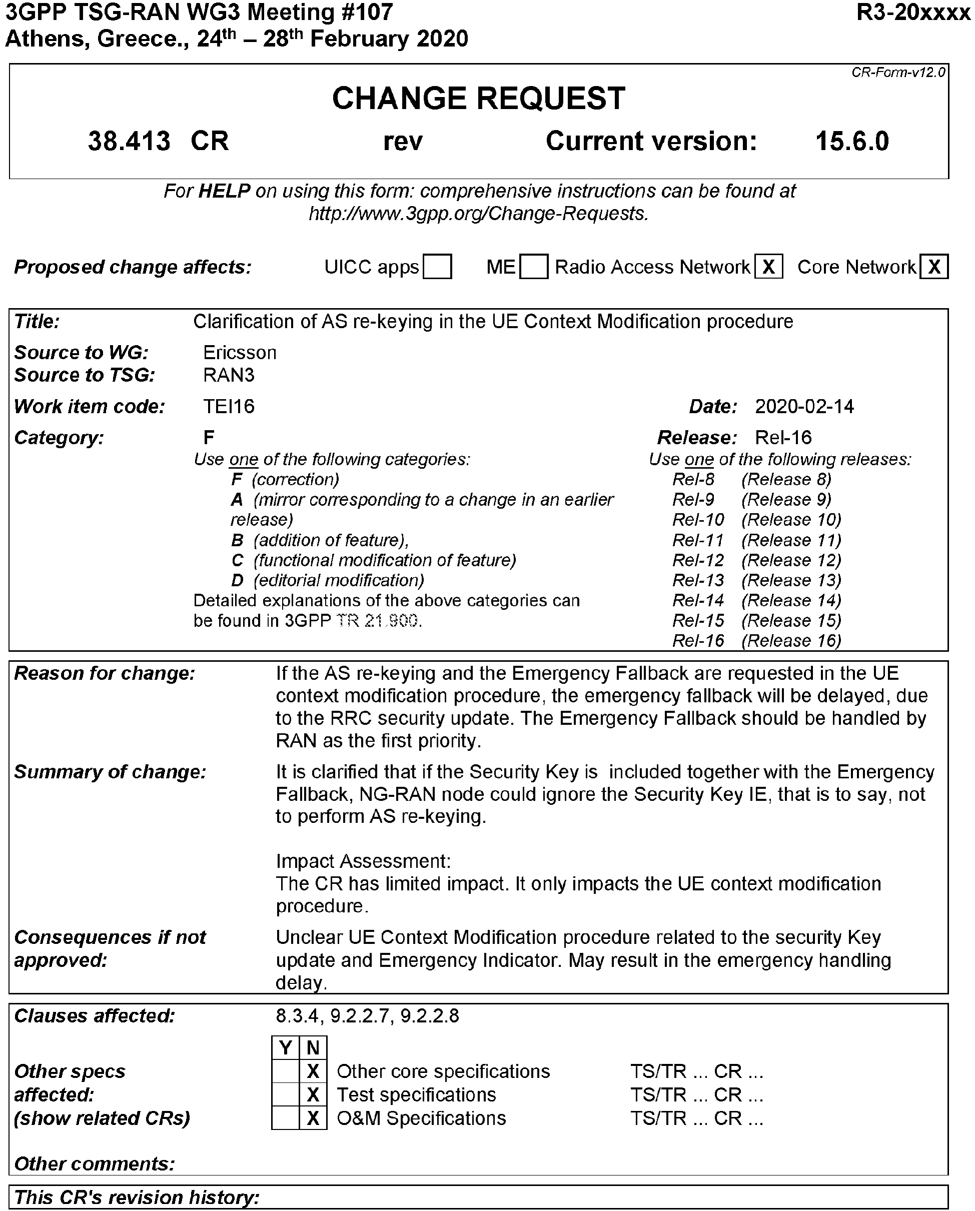

### 8.3.4 UE Context Modification

### 8.3.4.1 General

The purpose of the UE Context Modification procedure is to partly modify the established UE context. The procedure uses UE-associated signalling.

### 8.3.4.2 Successful Operation

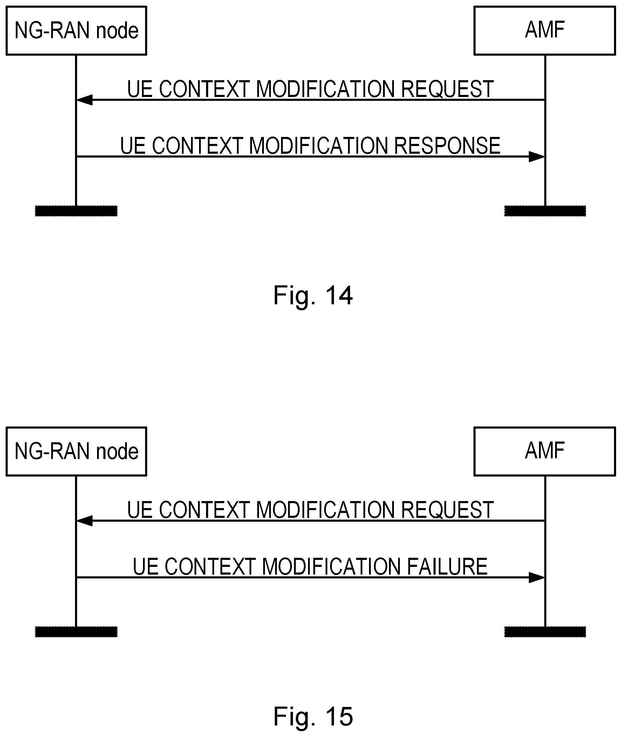

Figure 14 is a signalling diagram showing UE context modification: successful operation. Upon receipt of the UE CONTEXT MODIFICATION REQUEST message the NG-RAN node shall
- store the received *Security Key* IE and, if the NG-RAN node is required to activate security for the UE, take this security key into use.
- store the *UE Security Capabilities* IE and take them into use together with the received keys according to TS 33.501 [13].
- store the *Index to RAT*/*Frequency Selection Priority* IE and use it as defined in TS 23.501 [9].

If the *RAN Paging Priority* IE is included in the UE CONTEXT MODIFICATION REQUEST message, the NG-RAN node may use it to determine a priority for paging the UE in RRC_INACTIVE state.

If the *UE Aggregate Maximum Bit Rate* IE is included in the UE CONTEXT MODIFICATION REQUEST message, the NG-RAN node shall
- replace the previously provided UE Aggregate Maximum Bit Rate by the received UE Aggregate Maximum Bit Rate in the UE context;
- use the received UE Aggregate Maximum Bit Rate for all Non-GBR QoS flows for the concerned UE as specified in TS 23.501 [9].

If the *Core Network Assistance Information for RRC INACTIVE* IE is included in the UE CONTEXT MODIFICATION REQUEST message, the NG-RAN node shall, if supported, store this information in the UE context and use it for e.g. the RRC_INACTIVE state decision and RNA configuration for the UE and RAN paging if any for a UE in RRC_INACTIVE state, as specified in TS 38.300 [8].

If the *CN Assisted RAN Parameters Tuning* IE is included in the UE CONTEXT MODIFICATION REQUEST message, the NG-RAN node may use it as described in TS 23.501 [9].

If the *RRC Inactive Transition Report Request* IE is included in the UE CONTEXT MODIFICATION REQUEST message, the NG-RAN node shall, if supported, store this information in the UE context and report to the AMF the *User Location Information* IE and the *RRC State* IE in the UE CONTEXT MODIFICATION RESPONSE message.

If the *RRC Inactive Transition Report Request* IE is included in the UE CONTEXT MODIFICATION REQUEST message and set to "cancel report", the NG-RAN node shall, if supported, stop reporting to the AMF the RRC state of the UE.

The NG-RAN node shall report, in the UE CONTEXT MODIFICATION RESPONSE message to the AMF, the successful update of the UE context.

If the *Emergency Fallback Indicator* IE is included in the UE CONTEXT MODIFICATION REQUEST message, it indicates that the concerned UE context is subject to emergency service fallback as described in TS 23.501 [9] and the NG-RAN node may, if supported, take the appropriate mobility actions taking into account the *Emergency Service Target CN* IE if provided.

If the *New AMF UE NGAP ID* IE is included in the UE CONTEXT MODIFICATION REQUEST message, the NG-RAN node shall use the received value for future signalling with the AMF.

If the *New GUAMI* IE is included in the UE CONTEXT MODIFICATION REQUEST message, the NG-RAN node shall replace the previously stored GUAMI as specified in TS 23.501 [9].

### Interactions with RRC Inactive Transition Report procedure:

If the *RRC Inactive Transition Report Request* IE is included in the UE CONTEXT MODIFICATION REQUEST message and set to "single RRC connected state report", the NG-RAN node shall, if supported and if the UE is in RRC_INACTIVE state, send one subsequent RRC INACTIVE TRANSITION REPORT message to the AMF when the RRC state transitions to RRC_CONNECTED state.

If the *RRC Inactive Transition Report Request* IE is included in the UE CONTEXT MODIFICATION REQUEST message and set to "subsequent state transition report", the NG-RAN node shall, if supported, send the RRC INACTIVE TRANSITION REPORT message to the AMF to report the RRC state of the UE when the UE enters or leaves RRC_INACTIVE state.

### 8.3.4.3 Unsuccessful Operation

Figure 15 is a signalling diagram illustrating UE context modification: unsuccessful operation. In case the UE context update cannot be performed successfully, the NG-RAN node shall respond with the UE CONTEXT MODIFICATION FAILURE message to the AMF with an appropriate cause value in the *Cause* IE.

### 8.3.4.4 Abnormal Conditions

If the UE CONTEXT MODIFICATION REQUEST message including the *New AMF UE NGAP ID* IE is received after the NG-RAN node has initiated another class 1 NGAP EP, the NG-RAN node shall be prepared to receive the response message containing an AMF UE NGAP ID with the value received in the *New AMF UE NGAP ID* IE.

If the Security Key IE is included together with the Emergency Fallback Indicator IE in the UE CONTEXT MODIFICATION REQUEST message, the NG-RAN node ignores the Security Key IE, and indicates in the UE CONTEXT MODIFICATION RESPONSE that the Security Key Update not performed is ture (true).

### The next Change

### 9.2.2.7 UE CONTEXT MODIFICATION REQUEST

This message is sent by the AMF to provide UE Context information changes to the NG-RAN node.

Direction: AMF -> NG-RAN node

| **IE/Group Name** | **Presence** | **Range** | **IE type and reference** | **Semantics description** | **Criticality** | **Assigned Criticality** |
|---|---|---|---|---|---|---|
| Message Type | M | | 9.3.1.1 | | YES | reject |
| AMF UE NGAP ID | M | | 9.3.3.1 | | YES | reject |
| RAN UE NGAP ID | M | | 9.3.3.2 | | YES | reject |
| RAN Paging Priority | O | | 9.3.3.15 | | YES | ignore |
| Security Key | O | | 9.3.1.87 | This IE is ignored if Emergency Fallback Indicator is included in the message | YES | reject |
| Index to RAT/Frequency Selection Priority | O | | 9.3.1.61 | | YES | ignore |
| UE Aggregate Maximum Bit Rate | O | | 9.3.1.58 | | YES | ignore |
| UE Security Capabilities | O | | 9.3.1.86 | | YES | reject |
| Core Network Assistance Information for RRC INACTIVE | O | | 9.3.1.15 | | YES | ignore |
| Emergency Fallback Indicator | O | | 9.3.1.26 | | YES | reject |
| New AMF UE NGAP ID | O | | AMF UE NGAP ID | | YES | reject |
| | | | 9.3.3.1 | | | |
| RRC Inactive Transition Report Request | O | | 9.3.1.91 | | YES | ignore |
| New GUAMI | O | | GUAMI | | YES | reject |
| | | | 9.3.3.3 | | | |
| CN Assisted RAN Parameters Tuning | O | | 9.3.1.119 | | YES | ignore |

### 9.2.2.8 UE CONTEXT MODIFICATION RESPONSE

This message is sent by the NG-RAN node to confirm the performed UE context updates. Direction: NG-RAN node -> AMF

| **IE/Group Name** | **Presence** | **Range** | **IE type and reference** | **Semantics description** | **Criticality** | **Assigned Criticality** |
|---|---|---|---|---|---|---|
| Message Type | M | | 9.3.1.1 | | YES | reject |
| AMF UE NGAP ID | M | | 9.3.3.1 | | YES | ignore |
| RAN UE NGAP ID | M | | 9.3.3.2 | | YES | ignore |
| RRC State | O | | 9.3.1.92 | | YES | ignore |
| User Location Information | O | | 9.3.1.16 | | YES | ignore |
| Criticality Diagnostics | O | | 9.3.1.3 | | YES | ignore |
| Security Key Update not performed | O | | ENUMERATED (true) | This IE indicate if the AS security update is not performed by NG-RAN node | YES | reject |

### ABBREVIATIONS

At least some of the following abbreviations may be used in this disclosure. If there is an inconsistency between abbreviations, preference should be given to how it is used above. If listed multiple times below, the first listing should be preferred over any subsequent listing(s).
- AMF: Access and Mobility Management Function
- SMF: Session Management Function
- NG: Next Generation
- ng-eNB: Next Generation-eNB
- NG-RAN: Next Generation-Radio Access Network
- AS: Access Stratum
- NAS: Non-Access Stratum
- 5GC: 5G Core
- EPC: Evolved Packet Core
- PCF: Policy Control Function
- UDM: Unified Data Management
- NEF: Network Exposure Function
- AF: Application Function
- 1x RTT: CDMA2000 1x Radio Transmission Technology
- 3GPP: 3rd Generation Partnership Project
- 5G: 5th Generation
- ABS: Almost Blank Subframe
- ARQ: Automatic Repeat Request
- AWGN: Additive White Gaussian Noise
- BCCH: Broadcast Control Channel
- BCH: Broadcast Channel
- CA: Carrier Aggregation
- CC: Carrier Component
- CCCH SDU: Common Control Channel SDU
- CDMA: Code Division Multiplexing Access
- CGI: Cell Global Identifier
- CIR: Channel Impulse Response
- CP: Cyclic Prefix
- CPICH: Common Pilot Channel
- CPICH Ec/No: CPICH Received energy per chip divided by the power density in the band
- CQI: Channel Quality information
- C-RNTI: Cell RNTI
- CSI: Channel State information
- DCCH: Dedicated Control Channel
- DL: Downlink
- DM: Demodulation
- DMRS: Demodulation Reference Signal
- DRX: Discontinuous Reception
- DTX: Discontinuous Transmission
- DTCH: Dedicated Traffic Channel
- DUT: Device Under Test
- E-CID: Enhanced Cell-ID (positioning method)
- E-SMLC: Evolved-Serving Mobile Location Centre
- ECGI: Evolved CGI
- eNB: E-UTRAN NodeB
- ePDCCH: enhanced Physical Downlink Control Channel
- E-SMLC: evolved Serving Mobile Location Center
- E-UTRA: Evolved UTRA
- E-UTRAN: Evolved UTRAN
- FDD: Frequency Division Duplex
- FFS: For Further Study
- GERAN: GSM EDGE Radio Access Network
- gNB: Base station in NR
- GNSS: Global Navigation Satellite System
- GSM: Global System for Mobile communication
- HARQ: Hybrid Automatic Repeat Request
- HO: Handover
- HSPA: High Speed Packet Access
- HRPD: High Rate Packet Data
- LOS: Line of Sight
- LPP: LTE Positioning Protocol
- LTE: Long-Term Evolution
- MAC: Medium Access Control
- MBMS: Multimedia Broadcast Multicast Services
- MBSFN: Multimedia Broadcast multicast service Single Frequency Network
- MBSFN ABS MBSFN: Almost Blank Subframe
- MDT: Minimization of Drive Tests
- MIB: Master information Block
- MME: Mobility Management Entity
- MSC: Mobile Switching Center
- NPDCCH: Narrowband Physical Downlink Control Channel
- NR: New Radio
- OCNG: OFDMA Channel Noise Generator
- OFDM: Orthogonal Frequency Division Multiplexing
- OFDMA: Orthogonal Frequency Division Multiple Access
- OSS: Operations Support System
- OTDOA: Observed Time Difference of Arrival
- O&M: Operation and Maintenance
- PBCH: Physical Broadcast Channel
- P-CCPCH: Primary Common Control Physical Channel
- PCell: Primary Cell
- PCFICH: Physical Control Format Indicator Channel
- PDCCH: Physical Downlink Control Channel
- PDP: Profile Delay Profile
- PDSCH: Physical Downlink Shared Channel
- PGW: Packet Gateway
- PHICH: Physical Hybrid-ARQ Indicator Channel
- PLMN: Public Land Mobile Network
- PMI: Precoder Matrix Indicator
- PRACH: Physical Random Access Channel
- PRS: Positioning Reference Signal
- PSS: Primary Synchronization Signal
- PUCCH: Physical Uplink Control Channel
- PUSCH: Physical Uplink Shared Channel
- RACH: Random Access Channel
- QAM: Quadrature Amplitude Modulation
- RAN: Radio Access Network
- RAT: Radio Access Technology
- RLM: Radio Link Management
- RNC: Radio Network Controller
- RNTI: Radio Network Temporary Identifier
- RRC: Radio Resource Control
- RRM: Radio Resource Management
- RS: Reference Signal
- RSCP: Received Signal Code Power
- RSRP: Reference Symbol Received Power OR Reference Signal Received Power
- RSRQ: Reference Signal Received Quality OR Reference Symbol Received Quality
- RSSI: Received Signal Strength Indicator
- RSTD: Reference Signal Time Difference
- SCH: Synchronization Channel
- SCell: Secondary Cell
- SDU: Service Data Unit
- SFN: System Frame Number
- SGW: Serving Gateway
- SI: System information
- SIB: System information Block
- SNR: Signal to Noise Ratio
- SON: Self Optimized Network
- SS: Synchronization Signal
- SSS: Secondary Synchronization Signal
- TDD: Time Division Duplex
- TDOA: Time Difference of Arrival
- TOA: Time of Arrival
- TSS: Tertiary Synchronization Signal
- TTI: Transmission Time Interval
- UE: User Equipment
- UL: Uplink
- UMTS: Universal Mobile Telecommunication System
- USIM: Universal Subscriber identity Module
- UTDOA: Uplink Time Difference of Arrival
- UTRA: Universal Terrestrial Radio Access
- UTRAN: Universal Terrestrial Radio Access Network
- WCDMA: Wide CDMA
- WLAN: Wide Local Area Network

## Claims

1. A method performed by a first core network, CN, node in a telecommunication network, wherein the telecommunication network comprises a first radio access network, RAN, node that operates according to a first radio access technology, RAT, wherein an update to a first security configuration between a wireless device and the first RAN node is required; the method comprising:
after receiving a request from the wireless device for an emergency session so that the wireless device can establish an emergency call, initiating (901) an Emergency Service Fallback procedure to a second RAT, and
ignoring the update to the first security configuration.

2. The method of claim 1, wherein the step of initiating (901) the Emergency Service Fallback procedure comprises:
sending a first message to the first RAN node, wherein the first message indicates that an Emergency Service Fallback procedure is required.

3. The method of claim 2, wherein the first message comprises an Emergency Fallback Indicator information element, IE, that indicates that an Emergency Service Fallback procedure is required.

4. The method of claim 2, wherein the first message does not indicate that an update to the first security configuration is required.

5. The method of claim 4, wherein the first message does not comprise a Security Key, information element, IE or a UE Security Capability IE; or the first message comprises a Security Key IE or a UE Security Capability IE and a second IE indicating that the value of the Security Key IE or the UE Security Capability IE is to be ignored by the first RAN node.

6. The method of any of claims 2-5, wherein the first message is a context modification message for the wireless device.

7. A method performed by a first radio access network, RAN, node that operates according to a first radio access technology, RAT, in a telecommunication network, the method comprising:
after receiving a first message from a core network, CN, node in the telecommunication network, the first message indicating an update to a first security configuration between a wireless device and the first RAN node is required and that an Emergency Service Fallback procedure to a second RAT is to be performed so that the wireless device can establish an emergency call via the second RAT, initiating (1101) the Emergency Service Fallback procedure to the second RAT; and
ignoring the requirement to update to the first security configuration.

8. The method of claim 7, wherein the first message indicates the update to the first security configuration is required using a Security Key information element, IE or a UE Security Capability IE.

9. The method of any of claims 7-8, wherein the method further comprises:
prioritising the Emergency Service Fallback procedure and ignoring the update to the first security configuration.

10. The method of any of claims 7-9, wherein the first message comprises a Security Key IE or a UE Security Capability IE and a second IE indicating that the value of the Security Key IE or the UE Security Capability IE is to be ignored by the first RAN node.

11. The method of any of claims 7-10, wherein the method further comprises, prior to initiating (1101) the Emergency Service Fallback procedure:
receiving a request from the wireless device for an emergency session.

12. The method of any of claims 7-11, wherein the method further comprises, prior to initiating (1101) the Emergency Service Fallback procedure:
determining that an update to the first security configuration is required.

13. The method of any of claims 7-12, wherein the method further comprises:
after receiving the first message from the CN node, determining that the Emergency Service Fallback procedure to the second RAT is to be initiated.

14. The method of any of claims 7-13, wherein the method further comprises:
sending a second message to the first CN node, wherein the second message indicates that the update of the first security configuration was not performed.

15. The method of claim 14, wherein the second message is a context modification message for the wireless device.

16. A computer program product comprising a computer readable medium having computer readable code embodied therein, the computer readable code being configured such that, on execution by a suitable computer or processing unit, the computer or processing unit is caused to perform the method of any of claims 1-15.

17. A first core network, CN, node (206) for use in a telecommunication network, wherein the telecommunication network comprises a first radio access network, RAN, node (204) that operates according to a first radio access technology, RAT, wherein an update to a first security configuration between a wireless device (202) and the first RAN node (204) is required; the first CN node (206) configured to:
after receiving a request (216) from the wireless device (202) for an emergency session so that the wireless device (202) can establish an emergency call, initiate an Emergency Service Fallback procedure to a second RAT; wherein the first CN node (206) is further configured to:
ignore the update to the first security configuration.

18. The first CN node (206) of claim 17, wherein the first CN node (206) is configured to initiate the Emergency Service Fallback procedure by:
sending a first message (220) to the first RAN node (204), wherein the first message (220) indicates that an Emergency Service Fallback procedure is required.

19. A first radio access network, RAN, node (304) that operates according to a first radio access technology, RAT, in a telecommunication network, the first RAN node (304) configured to:
after receiving a first message (320) from a core network, CN, node (306) in the telecommunication network, the first message (320) indicating an update to a first security configuration between a wireless device (302) and the first RAN node (304) is required and that an Emergency Service Fallback procedure to a second RAT is to be performed so that the wireless device (302) can establish an emergency call via the second RAT, initiate the Emergency Service Fallback procedure to the second RAT; wherein the first RAN node (304) is further configured to:
ignore the requirement to update to the first security configuration.

20. The first RAN node (304) claim 19, wherein the first message (320) indicates the update to the first security configuration is required using a Security Key information element, IE or a UE Security Capability IE.

21. The first RAN node (304) of any of claims 19-20, wherein the first RAN node (304) is further configured to:
take into account only the Emergency Service Fallback procedure and ignore the update to the first security configuration.

22. The first RAN node (304) of any of claims 19-21, wherein the first RAN node (304) is further configured to:
prioritise the Emergency Service Fallback procedure and ignore the update to the first security configuration.

## Patentansprüche

1. Verfahren, das von einem ersten Kernnetzwerk-,CN- ,Knoten in einem Telekommunikationsnetzwerk durchgeführt wird, wobei das Telekommunikationsnetzwerk einen ersten Funkzugangsnetzwerk-,RAN-,Knoten umfasst, der gemäß einer ersten Funkzugangstechnologie, RAT, funktioniert, wobei eine Aktualisierung einer ersten Sicherheitskonfiguration zwischen einer drahtlosen Vorrichtung und dem ersten RAN-Knoten erforderlich ist; wobei das Verfahren umfasst:
Initiieren (901) einer Prozedur für einen Notdienst-Fallback auf eine zweite RAT nach dem Empfangen einer Anforderung von der drahtlosen Vorrichtung für eine Notfallsitzung, damit die drahtlose Vorrichtung einen Notruf aufbauen kann, und
Ignorieren der Aktualisierung der ersten Sicherheitskonfiguration.

2. Verfahren nach Anspruch 1, wobei der Schritt des Initiierens (901) einer Notdienst-Fallback-Prozedur umfasst:
Senden einer ersten Nachricht an den ersten RAN-Knoten, wobei die erste Nachricht anzeigt, dass eine Notdienst-Fallback-Prozedur erforderlich ist.

3. Verfahren nach Anspruch 2, wobei die erste Nachricht ein Informationselement, IE, eines Notfall-Fallback-Indikators umfasst, das anzeigt, dass ein Notdienst-Fallback erforderlich ist.

4. Verfahren nach Anspruch 2, wobei die erste Nachricht nicht anzeigt, dass eine Aktualisierung der ersten Sicherheitskonfiguration erforderlich ist.

5. Verfahren nach Anspruch 4, wobei die erste Nachricht weder ein Sicherheitsschlüssel-Informationselement, IE, noch ein UE-Sicherheitsfähigkeiten-IE umfasst; oder die erste Nachricht ein Sicherheitsschlüssel-IE oder ein UE-Sicherheitsfähigkeiten-IE und ein zweites IE umfasst, das anzeigt, dass der Wert des Sicherheitsschlüssel-IE oder des UE-Sicherheitsfähigkeiten-IE vom ersten RAN-Knoten ignoriert werden soll.

6. Verfahren nach einem der Ansprüche 2 bis 5, wobei die erste Nachricht eine Kontextmodifikationsnachricht für die drahtlose Vorrichtung ist.

7. Verfahren, das von einem ersten Funkzugangsnetzwerk- ,RAN-,Knoten in einem Telekommunikationsnetzwerk durchgeführt wird, der gemäß einer ersten Funkzugangstechnologie, RAT, funktioniert, wobei das Verfahren umfasst:
Initiieren (1101) einer Prozedur für einen Notdienst-Fallback auf eine zweite RAT nach dem Empfangen einer ersten Nachricht von einem Kernnetzwerk-,CN-,Knoten im Telekommunikationsnetzwerk, wobei die erste Nachricht anzeigt, dass eine Aktualisierung einer ersten Sicherheitskonfiguration zwischen einer drahtlosen Vorrichtung und dem ersten RAN-Knoten erforderlich ist und dass die Prozedur für den Notdienst-Fallback auf die zweite RAT durchgeführt werden soll, damit die drahtlose Vorrichtung einen Notruf über die zweite RAT aufbauen kann; und
Ignorieren der Anforderung zur Aktualisierung der ersten Sicherheitskonfiguration.

8. Verfahren nach Anspruch 7, wobei die erste Nachricht unter Verwendung eines Sicherheitsschlüssel-Informationselements, IE, oder eines UE-Sicherheitsfähigkeiten-IE anzeigt, dass die Aktualisierung der ersten Sicherheitskonfiguration erforderlich ist.

9. Verfahren nach einem der Ansprüche 7 bis 8, wobei das Verfahren ferner umfasst:
Priorisieren der Notdienst-Fallback-Prozedur und Ignorieren der Aktualisierung der ersten Sicherheitskonfiguration.

10. Verfahren nach einem der Ansprüche 7 bis 9, wobei die erste Nachricht ein Sicherheitsschlüssel-IE oder ein UE-Sicherheitsfähigkeiten-IE und ein zweites IE umfasst, das anzeigt, dass der Wert des Sicherheitsschlüssel-IE oder des UE-Sicherheitsfähigkeiten-IE vom ersten RAN-Knoten ignoriert werden soll.

11. Verfahren nach einem der Ansprüche 7 bis 10, wobei das Verfahren vor dem Initiieren (1101) der Notdienst-Fallback-Prozedur ferner umfasst:
Empfangen einer Anforderung von der drahtlosen Vorrichtung für eine Notfallsitzung.

12. Verfahren nach einem der Ansprüche 7 bis 11, wobei das Verfahren vor dem Initiieren (1101) der Notdienst-Fallback-Prozedur ferner umfasst:
Bestimmen, dass eine Aktualisierung der ersten Sicherheitskonfiguration erforderlich ist.

13. Verfahren nach einem der Ansprüche 7 bis 12, wobei das Verfahren ferner umfasst:
Bestimmen, dass die Prozedur für den Notdienst-Fallback auf die zweite RAT initiiert werden soll, nach dem Empfangen der ersten Nachricht vom CN-Knoten.

14. Verfahren nach einem der Ansprüche 7 bis 13, wobei das Verfahren ferner umfasst:
Senden einer zweiten Nachricht an den ersten CN-Knoten, wobei die zweite Nachricht anzeigt, dass die Aktualisierung der ersten Sicherheitskonfiguration nicht durchgeführt wurde.

15. Verfahren nach Anspruch 14, wobei die zweite Nachricht eine Kontextmodifikationsnachricht für die drahtlose Vorrichtung ist.

16. Computerprogrammprodukt, umfassend ein computerlesbares Medium mit computerlesbarem Code, der darauf enthalten ist, wobei der computerlesbare Code derart konfiguriert ist, dass bei Ausführung durch einen geeigneten Computer oder eine geeignete Verarbeitungseinheit der Computer oder die Verarbeitungseinheit zum Durchführen des Verfahrens nach einem der Ansprüche 1 bis 15 veranlasst wird.

17. Erster Kernnetzwerk-,CN-,Knoten (206) zur Verwendung in einem Telekommunikationsnetzwerk, wobei das Telekommunikationsnetzwerk einen ersten Funkzugangsnetzwerk-,RAN-,Knoten (204) umfasst, der gemäß einer ersten Funkzugangstechnologie, RAT, funktioniert, wobei eine Aktualisierung einer ersten Sicherheitskonfiguration zwischen einer drahtlosen Vorrichtung (202) und dem ersten RAN-Knoten (204) erforderlich ist; wobei der erste CN-Knoten (206) konfiguriert ist zum:
Initiieren einer Prozedur für einen Notdienst-Fallback auf eine zweite RAT nach dem Empfangen einer Anforderung (216) von der drahtlosen Vorrichtung (202) für eine Notfallsitzung, damit die drahtlose Vorrichtung (202) einen Notruf aufbauen kann; wobei der erste CN-Knoten (206) ferner konfiguriert ist zum:
Ignorieren der Aktualisierung der ersten Sicherheitskonfiguration.

18. Erster CN-Knoten (206) nach Anspruch 17, wobei der erste CN-Knoten (206) so konfiguriert ist, dass er eine Notdienst-Fallback-Prozedur initiiert durch:
Senden einer ersten Nachricht (220) an den ersten RAN-Knoten (204), wobei die erste Nachricht (220) anzeigt, dass eine Notdienst-Fallback-Prozedur erforderlich ist.

19. Erster Funkzugangsnetzwerk-,RAN-,Knoten (304) in einem Telekommunikationsnetzwerk, der gemäß einer ersten Funkzugangstechnologie, RAT, funktioniert, wobei der erste RAN-Knoten (304) konfiguriert ist zum:
Initiieren einer Prozedur für einen Notdienst-Fallback auf eine zweite RAT nach dem Empfangen einer ersten Nachricht (320) von einem Kernnetzwerk-,CN-,Knoten (306) im Telekommunikationsnetzwerk, wobei die erste Nachricht (320) anzeigt, dass eine Aktualisierung einer ersten Sicherheitskonfiguration zwischen einer drahtlosen Vorrichtung (302) und dem ersten RAN-Knoten (304) erforderlich ist und dass die Prozedur für den Notdienst-Fallback auf die zweite RAT durchgeführt werden soll, damit die drahtlose Vorrichtung (302) einen Notruf über die zweite RAT aufbauen kann; wobei der erste RAN-Knoten (304) ferner konfiguriert ist zum:
Ignorieren der Anforderung zur Aktualisierung der ersten Sicherheitskonfiguration.

20. Erster RAN-Knoten (304) nach Anspruch 19, wobei die erste Nachricht (320) unter Verwendung eines Sicherheitsschlüssel-Informationselements, IE, oder eines UE-Sicherheitsfähigkeiten-IE anzeigt, dass die Aktualisierung der ersten Sicherheitskonfiguration erforderlich ist.

21. Erster RAN-Knoten (304) nach einem der Ansprüche 19 bis 20, wobei der erste RAN-Knoten (304) ferner konfiguriert ist zum:
Berücksichtigen nur der Notdienst-Fallback-Prozedur und Ignorieren der Aktualisierung der ersten Sicherheitskonfiguration.

22. Erster RAN-Knoten (304) nach einem der Ansprüche 19 bis 21, wobei der erste RAN-Knoten (304) ferner konfiguriert ist zum:
Priorisieren der Notdienst-Fallback-Prozedur und Ignorieren der Aktualisierung der ersten Sicherheitskonfiguration.

## Revendications

1. Procédé réalisé par un premier noeud de réseau central, CN, dans un réseau de télécommunication, dans lequel le réseau de télécommunication comprend un premier noeud de réseau d'accès radio, RAN, qui fonctionne selon une première technologie d'accès radio, RAT, dans lequel une mise à jour d'une première configuration de sécurité entre un dispositif sans fil et le premier noeud RAN est exigée ; le procédé comprenant :
après la réception d'une demande, depuis le dispositif sans fil, d'une session d'urgence de sorte que le dispositif sans fil puisse établir un appel d'urgence, l'initiation (901) d'une procédure de repli de service d'urgence à une deuxième RAT, et
la non-prise en compte de la mise à jour de la première configuration de sécurité.

2. Procédé selon la revendication 1, dans lequel l'étape de l'initiation (901) de la procédure de repli de service d'urgence comprend :
l'envoi d'un premier message au premier noeud RAN, dans lequel le premier message indique qu'une procédure de repli de service d'urgence est exigée.

3. Procédé selon la revendication 2, dans lequel le premier message comprend un élément d'information, IE, d'indicateur de repli d'urgence qui indique qu'une procédure de repli de service d'urgence est exigée.

4. Procédé selon la revendication 2, dans lequel le premier message n'indique pas qu'une mise à jour de la première configuration de sécurité est exigée.

5. Procédé selon la revendication 4, dans lequel le premier message ne comprend pas un élément d'information, IE, de clé de sécurité ou un IE de capacité de sécurité d'UE ; ou le premier message comprend un IE de clé de sécurité ou un IE de capacité de sécurité d'UE et un deuxième IE indiquant que la valeur de l'IE de clé de sécurité ou de l'IE de capacité de sécurité d'UE ne doit pas être prise en compte par le premier noeud RAN.

6. Procédé selon l'une quelconque des revendications 2 à 5, dans lequel le premier message est un message de modification de contexte pour le dispositif sans fil.

7. Procédé réalisé par un premier noeud de réseau d'accès radio, RAN, qui fonctionne selon une première technologie d'accès radio, RAT, dans un réseau de télécommunication, le procédé comprenant :
après la réception d'un premier message depuis un noeud de réseau central, CN, dans le réseau de télécommunication, le premier message indiquant qu'une mise à jour d'une première configuration de sécurité entre un dispositif sans fil et le premier noeud RAN est exigée et qu'une procédure de repli de service d'urgence à une deuxième RAT doit être réalisée de sorte que le dispositif sans fil puisse établir un appel d'urgence via la deuxième RAT, l'initiation (1101) d'une procédure de repli de service d'urgence à la deuxième RAT ; et
la non-prise en compte de l'exigence de mise à jour de la première configuration de sécurité.

8. Procédé selon la revendication 7, dans lequel le premier message indique que la mise à jour de la première configuration de sécurité est exigée en utilisant un élément d'information, IE, de clé de sécurité, ou un IE de capacité de sécurité d'UE.

9. Procédé selon la revendication 7 ou 8, dans lequel le procédé comprend en outre :
la priorisation de la procédure de repli de service d'urgence et la non-prise en compte de la mise à jour de la première configuration de sécurité.

10. Procédé selon l'une quelconque des revendications 7 à 9, dans lequel le premier message comprend un IE de clé de sécurité ou un IE de capacité de sécurité d'UE et un deuxième IE indiquant que la valeur de l'IE de clé de sécurité ou de l'IE de capacité de sécurité d'UE ne doit pas être prise en compte par le premier noeud RAN.

11. Procédé selon l'une quelconque des revendications 7 à 10, dans lequel le procédé comprend en outre, avant l'initiation (1101) de la procédure de repli de service d'urgence :
la réception d'une demande, depuis le dispositif sans fil, d'une session d'urgence.

12. Procédé selon l'une quelconque des revendications 7 à 11, dans lequel le procédé comprend en outre, avant l'initiation (1101) de la procédure de repli de service d'urgence :
la détermination qu'une mise à jour de la première configuration de sécurité est exigée.

13. Procédé selon l'une quelconque des revendications 7 à 12, dans lequel le procédé comprend en outre :
après la réception du premier message depuis le noeud CN, la détermination que la procédure de repli de service d'urgence à la deuxième RAT doit être initiée.

14. Procédé selon l'une quelconque des revendications 7 à 13, dans lequel le procédé comprend en outre :
l'envoi d'un deuxième message au premier noeud CN, dans lequel le deuxième message indique que la mise à jour de la première configuration de sécurité n'a pas été réalisée.

15. Procédé selon la revendication 14, dans lequel le deuxième message est un message de modification de contexte pour le dispositif sans fil.

16. Produit programme informatique comprenant un support lisible par ordinateur sur lequel est stocké un code lisible par ordinateur, le code lisible par ordinateur étant configuré de sorte que, lorsqu'il est exécuté par un ordinateur approprié ou une unité de traitement appropriée, l'ordinateur ou l'unité de traitement soit amené à réaliser le procédé selon l'une quelconque des revendications 1 à 15.

17. Premier noeud de réseau central, CN, (206) destiné à être utilisé dans un réseau de télécommunication, dans lequel le réseau de télécommunication comprend un premier noeud de réseau d'accès radio, RAN, (204) qui fonctionne selon une première technologie d'accès radio, RAT, dans lequel une mise à jour d'une première configuration de sécurité entre un dispositif sans fil (202) et le premier noeud RAN (204) est exigée ; le premier noeud CN (206) étant configuré pour :
après la réception d'une demande (216), depuis le dispositif sans fil (202), d'une session d'urgence de sorte que le dispositif sans fil (202) puisse établir un appel d'urgence, initier une procédure de repli de service d'urgence à une deuxième RAT ; dans lequel le premier noeud CN (206) est en outre configuré pour :
ne pas prendre en compte la mise à jour de la première configuration de sécurité.

18. Premier noeud CN (206) selon la revendication 17, dans lequel le premier noeud CN (206) est configuré pour initier la procédure de repli de service d'urgence par :
l'envoi d'un premier message (220) au premier noeud RAN (204), dans lequel le premier message (220) indique qu'une procédure de repli de service d'urgence est exigée.

19. Premier noeud de réseau d'accès radio, RAN, (304) qui fonctionne selon une première technologie d'accès radio, RAT, dans un réseau de télécommunication, le premier noeud RAN (304) étant configuré pour :
après la réception d'un premier message (320) depuis un noeud de réseau central, CN, (306) dans le réseau de télécommunication, le premier message (320) indiquant qu'une mise à jour d'une première configuration de sécurité entre un dispositif sans fil (302) et le premier noeud RAN (304) est exigée et qu'une procédure de repli de service d'urgence à une deuxième RAT doit être réalisée de sorte que le dispositif sans fil (302) puisse établir un appel d'urgence via la deuxième RAT, initier la procédure de repli de service d'urgence à la deuxième RAT ; dans lequel le premier noeud RAN (304) est en outre configuré pour :
ne pas prendre en compte l'exigence de mise à jour de la première configuration de sécurité.

20. Premier noeud RAN (304) selon la revendication 19, dans lequel le premier message (320) indique que la mise à jour de la première configuration de sécurité est exigée en utilisant un élément d'information, IE, de clé de sécurité, ou un IE de capacité de sécurité d'UE.

21. Premier noeud RAN (304) selon la revendication 19 ou 20, dans lequel le premier noeud RAN (304) est en outre configuré pour :
prendre en compte uniquement la procédure de repli de service d'urgence et ne pas prendre en compte la mise à jour de la première configuration de sécurité.

22. Premier noeud RAN (304) selon l'une quelconque des revendications 19 à 21, dans lequel le premier noeud RAN (304) est un outre configuré pour :
prioriser la procédure de repli de service d'urgence et ne pas prendre en compte la mise à jour de la première configuration de sécurité.
